# EUROPEAN PATENT APPLICATION

(11) **EP 4 648 187 A1**
(43) Date of publication of application: **12.11.2025**
(21) Application number: 23928297.3
(22) Date of filing: 22.09.2023
(51) Int. Cl.: H01M 50/202, H01M 50/244, H01M 50/271, H01M 10/42, H01M 10/052, H01M 10/0525, H01M 10/054, H01M 10/058

(54) **BATTERY CELL, BATTERY, AND ELECTRICAL DEVICE**

(30) Priority: 17.03.2023 CN 202310264487
(71) Applicant: Contemporary Amperex Technology (Hong Kong) Limited, Hong Kong (HK)
(72) Inventor: XU, Liangfan, Ningde, Fujian 352100 (CN); ZHOU, Wenlin, Ningde, Fujian 352100 (CN); ZHANG, Qianqian, Ningde, Fujian 352100 (CN); LI, Xing, Ningde, Fujian 352100 (CN); JIN, Haizu, Ningde, Fujian 352100 (CN)
(74) Representative: Laufhütte, Dieter
(86) International application number: PCT/CN2023/120698
(87) International publication number: WO 2024/192992

(57) **Abstract**

This application provides a cell, a battery, and an electric device, and relates to the field of batteries. The cell includes a can and a guard. The can includes a case and an end lid. The case has an opening. The end lid is connected to the case and closes the opening. The end lid is connected to the case to form a connecting portion. The guard is arranged on an outer surface of the can and covers at least a part of the connecting portion. The cell has the guard arranged thereon, where the guard covers at least a part of the connecting portion. The guard can prevent liquid from leaking from the connecting portion to some extent, and lower a liquid leakage speed, thereby improving safety of the cell to some extent.

## Description

### CROSS-REFERENCE TO RELATED APPLICATIONS

This application claims priority to Chinese Patent Application No. 2023102644873, entitled "CELL, BATTERY, AND ELECTRIC DEVICE" and filed on March 17, 2023, which is incorporated herein by reference in its entirety.

### TECHNICAL FIELD

This application relates to the field of batteries, and specifically, to a cell, a battery, and an electric device.

### BACKGROUND

Batteries are widely used in the field of new energy such as electric vehicles and new energy vehicles. New energy vehicles and electric vehicles have become a new development trend in the automotive industry. For the development of battery technologies, various design factors, for example, performance parameters such as an energy density, a discharge capacity, and a charge-discharge rate, all need to be taken into account. In addition, safety of a battery also needs to be taken into account. However, safety of the existing batteries is poor.

### SUMMARY

An objective of embodiments of this application is to provide a cell, a battery, and an electric device, which aims to alleviate poor safety of a battery in the related art.

According to a first aspect, an embodiment of this application provides a cell, including a can and a guard. The can includes a case and an end lid. The case has an opening. The end lid is connected to the case and closes the opening, and the end lid is connected to the case to form a connecting portion. The guard is arranged on an outer surface of the can and covers at least a part of the connecting portion.

In the foregoing technical solution, the guard is arranged on the cell, and the guard covers at least a part of the connecting portion. The guard can prevent liquid from leaking from the connecting portion to some extent, and lower a liquid leakage speed, thereby improving safety of the cell to some extent.

In an optional technical solution of this embodiment of this application, the guard includes a top wall, where the top wall covers an outer surface of the end lid and at least a part of the connecting portion, and the top wall is provided with a liquid outlet hole.

In the foregoing technical solution, when liquid leakage occurs at the connecting portion, the guard can guide liquid leaking from the connecting portion to flow out from the liquid outlet hole. The liquid flowing out from the liquid outlet hole can be collected or treated by another structure in a battery, to prevent the liquid from flowing around and causing a short-circuit fire or ignition by a high voltage, which is conducive to improving the safety of the cell.

In an optional technical solution of this embodiment of this application, the guard includes a peripheral wall, where the peripheral wall is arranged around an outer edge of the top wall, and the peripheral wall covers at least a part of an outer peripheral surface of the case.

In the foregoing technical solution, the top wall and the peripheral wall enclose an accommodating space. When liquid leakage occurs at the connecting portion, liquid first gathers in the accommodating space and then is drained from the liquid outlet hole, so that the liquid leaking from the connecting portion is guided to flow out from a preset position of the guard, to prevent the liquid from flowing around and causing a short-circuit fire or ignition by a high voltage, which is conducive to improving the safety of the cell.

In an optional technical solution of this embodiment of this application, a convex portion is convexly arranged on a side of the guard facing the can, and the convex portion is arranged around the liquid outlet hole.

In the foregoing technical solution, by arranging the convex portion around the liquid outlet hole, a speed at which liquid flows out of the guard is lowered, to prevent the liquid from spreading to another position due to an excessively high speed at which the liquid flows out of the guard.

In an optional technical solution of this embodiment of this application, a height by which the convex portion protrudes from the guard is D, satisfying: 0.1 mm≤D≤0.5 mm.

In the foregoing technical solution, the height by which the convex portion protrudes from the guard is limited to a range of 0.1 to 0.5 mm, which greatly slows down the liquid flowing out of the guard without significantly increasing the height of the guard, thereby helping to reduce space occupation by the guard and improving the energy density of the battery. If D<0.1 mm, the height by which the convex portion protrudes from the guard is small, and an effect of slowing down the liquid flowing out of the guard is poor. If D>0.5 mm, the guard occupies a large space, which is not conducive to improving the energy density of the battery.

In an optional technical solution of this embodiment of this application, an accommodating space is formed in the guard, and the connecting portion is at least partially located in the accommodating space.

In the foregoing technical solution, the accommodating space is formed in the guard, so that liquid leaking from the connecting portion can be stored in the accommodating space, to prevent the liquid from flowing around and causing a short-circuit fire or ignition by a high voltage, which is conducive to improving the safety of the cell.

In an optional technical solution of this embodiment of this application, the guard includes a top wall and a peripheral wall, where the top wall covers an outer surface of the end lid, and the peripheral wall is arranged around an outer edge of the top wall, the peripheral wall covers at least a part of an outer peripheral surface of the case, and the top wall and the peripheral wall enclose the accommodating space.

In the foregoing technical solution, the top wall and the peripheral wall enclose the accommodating space. When liquid leakage occurs at the connecting portion, the guard can store liquid leaking from the connecting portion in the accommodating space, to prevent the liquid from flowing around and causing a short-circuit fire or ignition by a high voltage, which is conducive to improving the safety of the cell.

In an optional technical solution of this embodiment of this application, the guard is provided with a liquid outlet hole, where the liquid outlet hole is in communication with the accommodating space.

In the foregoing technical solution, when liquid leakage occurs at the connecting portion, liquid first gathers in the accommodating space and then is drained from the liquid outlet hole, so that the liquid leaking from the connecting portion is guided to flow out from a preset position of the guard, to prevent the liquid from flowing around and causing a short-circuit fire or ignition by a high voltage, which is conducive to improving the safety of the cell.

In an optional technical solution of this embodiment of this application, the guard includes a first wall, a second wall, and a third wall that are sequentially connected, where the second wall is annular, the second wall is arranged opposite to the connecting portion, the first wall and the third wall are oppositely arranged on two sides of the second wall in a width direction, one of the first wall and the third wall is connected to the case, the other of the first wall and the third wall is connected to the end lid, and the first wall, the second wall, and the third wall jointly define the accommodating space.

In the foregoing technical solution, the first wall, the second wall, and the third wall jointly define the accommodating space, and the connecting portion is accommodated in the accommodating space. In this way, liquid leaking from the connecting portion first gathers in the accommodating space, and then is drained from the liquid outlet hole, to prevent the liquid from flowing around and causing a short-circuit fire or ignition by a high voltage, which is conducive to improving the safety of the cell.

In an optional technical solution of this embodiment of this application, the cell further includes a vent mechanism, where the vent mechanism is arranged on the end lid or the case, and the guard covers the vent mechanism.

In the foregoing technical solution, the vent mechanism is also a weak position, and liquid is prone to leaking from the vent mechanism. By covering the vent mechanism with the guard, the guard can prevent liquid from leaking from the vent mechanism to some extent, and lower the liquid leakage speed, thereby improving the safety of the cell to some extent.

In an optional technical solution of this embodiment of this application, the vent mechanism is arranged on the end lid, and a gap is provided between the vent mechanism and the guard along a thickness direction of the end lid.

In the foregoing technical solution, when an internal pressure or temperature of the cell reaches an initiation pressure, the vent mechanism opens to vent. The gap is provided between the vent mechanism and the guard along the thickness direction, to allow the vent mechanism to open, thereby preventing the vent mechanism from failing to open to vent because the guard blocks the vent mechanism.

In an optional technical solution of this embodiment of this application, a dimension of the gap along the thickness direction is H, satisfying: H≥1.5 mm.

In the foregoing technical solution, the dimension of the gap along the thickness direction is made greater than 1.5 mm, to allow the vent mechanism to open by a large range, so that when an internal pressure or temperature of the cell reaches an initiation pressure, the vent mechanism can smoothly vent.

In an optional technical solution of this embodiment of this application, the cell further includes a liquid injection hole and a sealing member, where the liquid injection hole is provided on in the end lid, the sealing member is configured to seal the liquid injection hole, and the guard covers the liquid injection hole and the sealing member.

In the foregoing technical solution, although the liquid injection hole is sealed by the sealing member, the liquid injection hole is also a weak position in a scenario in which the cell is placed upside down, and liquid is prone to leaking from the liquid injection hole. By covering the liquid injection hole and the sealing member with the guard, the guard can prevent liquid from leaking from the liquid injection hole to some extent, and lower the liquid leakage speed, thereby improving the safety of the cell to some extent.

In an optional technical solution of this embodiment of this application, the guard includes a liquid-absorbing material, where a volume of liquid absorbable by the liquid-absorbing material is at least three times of a volume of the liquid-absorbing material.

In the foregoing technical solution, the guard is made of the liquid-absorbing material, to help the guard to absorb liquid leaking from the connecting portion. Because a volume of free liquid in the cell is limited, when the liquid-absorbing material can absorb liquid whose volume is at least three times a volume of the liquid-absorbing material, effective absorption of leaked liquid can be ensured.

In an optional technical solution of this embodiment of this application, the guard completely covers the connecting portion.

In the foregoing technical solution, the guard completely covers the connecting portion. In this way, regardless of a specific position at which liquid leakage occurs at the connecting portion, the guard can guide liquid to flow out from the preset position of the guard, to prevent the liquid from flowing around and causing a short-circuit fire or ignition by a high voltage, which is conducive to improving the safety of the cell.

In an optional technical solution of this embodiment of this application, the guard covers at least a part of the end lid and at least a part of the case.

In the foregoing technical solution, the guard covers at least a part of the end lid and at least a part of the case, to cover positions near the connecting portion. In this way, liquid leaking from the connecting portion is less prone to flowing around and causing a short-circuit fire or ignition by a high voltage, which is conducive to improving the safety of the cell.

In an optional technical solution of this embodiment of this application, the connecting portion includes a first connecting region and a second connecting region, where the first connecting region is connected to the second connecting region, a fusion depth of the first connecting region is smaller than a fusion depth of the second connecting region, and the guard covers at least a part of the first connecting region.

In the foregoing technical solution, the fusion depth of the first connecting region is smaller than the fusion depth of the second connecting region. Upon comparison, the first connecting region is more prone to breakage and liquid leakage. By covering at least a part of the first connecting region with the guard, the guard can prevent liquid from leaking from the first connecting region to some extent, and lower the liquid leakage speed, thereby improving the safety of the cell to some extent.

In an optional technical solution of this embodiment of this application, the cell includes an electrode terminal, where the electrode terminal is arranged on the end lid, and the guard covers the end lid and avoids the electrode terminal.

In the foregoing technical solution, because the electrode terminal needs to output electric energy of the cell or input electric energy to the cell, when the guard is arranged on the end lid, the guard needs to avoid the electrode terminal, to prevent the guard from interfering with input or output of electric energy of the cell.

In an optional technical solution of this embodiment of this application, the guard is provided with the liquid outlet hole, where the electrode terminal extends out of the guard from the liquid outlet hole.

In the foregoing technical solution, the liquid outlet hole serves as both the preset position of the guard and an extending position of the electrode terminal. One liquid outlet hole implements two functions, which is conducive to simplifying the structure of the guard.

In an optional technical solution of this embodiment of this application, the guard is provided with the liquid outlet hole, and the guard is further provided with an avoidance hole, where the liquid outlet hole is spaced apart from the avoidance hole, and the electrode terminal extends out of the guard from the avoidance hole.

In the foregoing technical solution, the liquid outlet hole serves as the preset position of the guard, and liquid flows out from the liquid outlet hole. The electrode terminal extends out of the guard from the avoidance hole. In this way, liquid outlet from the liquid outlet hole and the electrode terminal do not interfere with each other, and the additionally provided liquid outlet hole has high flexibility.

In an optional technical solution of this embodiment of this application, the cell further includes an electrode assembly, where the electrode assembly is accommodated in the can, and the end lid is configured to support the electrode assembly in a gravity direction.

In the foregoing technical solution, the end lid supports the electrode assembly in the gravity direction, which corresponds to a scenario in which the cell is used upside down. When the cell is used upside down, a risk of liquid leakage in the connecting portion increases, and the guard can achieve a better guarding effect.

In an optional technical solution of this embodiment of this application, the guard is an insulation sheet, and the insulation sheet is adhered to the outer surface of the end lid through an adhesive layer and covers at least a part of the connecting portion.

In the foregoing technical solution, the guard has an insulation function, and can isolate the end lid from other components, to prevent the other components from coming into contact with the end lid and causing a short circuit.

In an optional technical solution of this embodiment of this application, the guard is an insulation film, the case has an outer peripheral surface arranged around the opening, and the insulation film coats the outer peripheral surface and covers at least a part of the connecting portion.

In the foregoing technical solution, the insulation film coats the outer peripheral surface of the case and covers at least a part of the connecting portion, so that not only an effect of slowing down liquid leakage from the connecting portion can be achieved, but also the case can be isolated from other components, thereby reducing a risk that the other components come into contact with the case and cause a short circuit.

In an optional technical solution of this embodiment of this application, the insulation film includes a main body portion and a first flange portion, the main body portion coats the outer peripheral surface, the first flange portion is connected to an edge of the main body portion, and the first flange portion is located at the end lid and covers at least a part of the connecting portion.

In the foregoing technical solution, the main body portion coats the outer peripheral surface of the case, to isolate the case from other components. The first flange portion covers at least a part of the connecting portion, which can lower the liquid leakage speed. In addition, the first flange portion is located at the end lid and can isolate the end lid from other components, thereby reducing a risk that the end lid comes into contact with the other components and causes a short circuit, which is conducive to improving the safety of the cell.

In an optional technical solution of this embodiment of this application, the case includes a side wall and a bottom wall, the side wall and the bottom wall are integrally formed, one end of the side wall is connected to the bottom wall, and an other end of the side wall encloses the opening; and the main body portion coats an outer surface of the side wall, the guard includes a second flange portion, the second flange portion is connected to an end of the main body portion facing away from the first flange portion, and the second flange portion covers at least a part of the bottom wall.

In the foregoing technical solution, the second flange portion is formed to cover the bottom wall, so that the main body portion can completely cover the outer surface of the side wall, thereby reducing a risk that the side wall comes into contact with the other components and causes a short circuit, which is conducive to improving the safety of the cell. In addition, the second flange portion covers at least a part of the bottom wall and can also isolate the bottom wall from other components, thereby reducing a risk that the bottom wall comes into contact with the other components and causes a short circuit, which is conducive to improving the safety of the cell. When the second flange portion covers a part of the bottom wall, the second flange portion defines an accommodating cavity, and the accommodating cavity may be filled with an adhesive, to facilitate adhesion to the bottom wall, thereby fastening the cell.

In an optional technical solution of this embodiment of this application, the case includes a side wall and a bottom wall that are integrally formed, the side wall is arranged around the bottom wall, and along a thickness direction of the bottom wall, one end of the side wall is connected to the bottom wall, and an other end thereof encloses the opening; and the insulation film includes a main body portion and a third flange portion, the main body portion coats the outer surface of the end lid and the outer surface of the side wall, the third flange portion is connected to an edge of the main body portion, and the third flange portion covers at least a part of the bottom wall.

In the foregoing technical solution, the main body portion coats the outer surface of the end lid and the outer surface of the side wall, to isolate the end lid from other components and isolate the side wall from other components, thereby reducing a risk that the end lid comes into contact with the other components and causes a short circuit and a risk that the side wall comes into contact with the other components and causes a short circuit, which is conducive to improving the safety of the cell. While coating the outer surfaces of the end lid and the side wall, the main body portion also covers the connecting portion formed by connecting the end lid and the side wall, so that the speed of leakage of liquid from the connecting portion can be lowered, thereby improving the safety of the cell. The third flange portion is formed to cover the bottom wall, so that the main body portion can completely cover the outer surface of the side wall, thereby reducing a risk that the side wall comes into contact with the other components and causes a short circuit, which is conducive to improving the safety of the cell. In addition, the third flange portion covers at least a part of the bottom wall and can also isolate the bottom wall from other components, thereby reducing a risk that the bottom wall comes into contact with the other components and causes a short circuit, which is conducive to improving the safety of the cell. When the third flange portion covers a part of the bottom wall, the third flange portion defines the accommodating cavity, and the accommodating cavity may be filled with an adhesive, to facilitate adhesion to the bottom wall, thereby fastening the cell.

In an optional technical solution of this embodiment of this application, the side wall includes first wall portions and second wall portions, where the first wall portions are connected to the second wall portions, and the first wall portion is a wall portion having a largest surface area in the case; and the main body portion includes a first covering region, a second covering region, and an overlapping region, where the overlapping region connects the first covering region and the second covering region, the first covering region completely covers the first wall portion, the second covering region completely covers the second wall portion, and the overlapping region is folded over on the first covering region or the second covering region.

In the foregoing technical solution, the first covering region completely covers the first wall portion, and the second covering region completely covers the second wall portion. When liquid leakage occurs at the connecting portion, liquid needs to climb from a position of the end lid along the first wall portion and/or the second wall portion toward the bottom wall, and finally flows out of the guard from a position of the third flange portion, leading to a longer path and longer time required for the liquid to leak from the guard, which can effectively lower the liquid leakage speed, thereby improving the safety of the cell.

In an optional technical solution of this embodiment of this application, the main body portion includes two first covering regions, two second covering regions, and a third covering region, the first covering regions and the first wall portions are in a one-to-one correspondence, the second covering regions and the second wall portions are in a one-to-one correspondence, the third covering region coats the end lid, both the first covering regions and the second covering regions are connected to the third covering region, and creases are formed at connection positions between the first covering regions and the third covering region and connection positions between the second covering regions and the third covering region.

In the foregoing technical solution, an insulation film coats the end lid and the case in a folding manner, leading to good integrity and uneasy vulnerability.

According to a second aspect, an embodiment of this application further provides a battery. The battery includes the foregoing cell.

In an optional technical solution of this embodiment of this application, the battery further includes a wire harness separator, where the wire harness separator is provided with a drain channel, the guard is provided with a liquid outlet hole, and the liquid outlet hole is configured for guiding liquid to the drain channel.

In the foregoing technical solution, when liquid leakage occurs at the connecting portion, the guard can guide, through the liquid outlet hole, liquid leaking from the connecting portion to the drain channel on the wire harness separator. The liquid passing through the drain channel no longer poses a safety risk, which helps to improve safety of the cell.

In an optional technical solution of this embodiment of this application, the liquid outlet hole and the drain channel are arranged at least partially opposite to each other along a gravity direction.

In the foregoing technical solution, when liquid leakage occurs at the connecting portion, the guard can guide liquid leaking from the connecting portion to flow out from the liquid outlet hole of the guard, and the liquid flowing out from the liquid outlet hole can directly flow into the drain channel under the action of gravity, which is simple, convenient, and highly safe.

In an optional technical solution of this embodiment of this application, the battery further includes a box body, where the cell is arranged in the box body, and the end lid is arranged on a side of the cell close to a bottom wall of the box body.

In the foregoing technical solution, the end lid is arranged on the side of the cell close to the bottom wall of the box body, that is, the cell is placed upside down in the box body.

According to a third aspect, an embodiment of this application further provides an electric device, including the foregoing battery, where the battery is configured to provide electric energy to the electric device.

### BRIEF DESCRIPTION OF THE DRAWINGS

To illustrate the technical solutions of the embodiments of this application more clearly, the following briefly introduces the accompanying drawings required in the embodiments of this application. Apparently, the accompanying drawings described below are only some embodiments of this application. For a person of ordinary skill in the art, other drawings can also be obtained according to the drawings without any creative work.
FIG. 1 is a schematic structural diagram of a vehicle according to some embodiments of this application;
FIG. 2 is an exploded view of a battery according to some embodiments of this application;
FIG. 3 is a schematic structural diagram of a cell according to some embodiments of this application;
FIG. 4 is an exploded view of a cell according to some embodiments of this application;
FIG. 5 is a schematic top view of a cell according to some embodiments of this application;
FIG. 6 is a schematic structural diagram of a guard according to some embodiments of this application;
FIG. 7 is a schematic top view of a guard according to some embodiments of this application;
FIG. 8 is a cross-sectional view of a position B-B in FIG. 7;
FIG. 9 is a schematic structural diagram of a cell according to some other embodiments of this application;
FIG. 10 is a schematic structural diagram of a guard according to some other embodiments of this application;
FIG. 11 is a cross-sectional view of a position A-A in FIG. 5;
FIG. 12 is an exploded view of a cell according to some still other embodiments of this application;
FIG. 13 is a schematic top view of a guard according to some still other embodiments of this application;
FIG. 14 is a cross-sectional view of a position C-C in FIG. 13;
FIG. 15 is a schematic diagram of connecting a guard to an adhesive layer according to some still other embodiments of this application;
FIG. 16 is a schematic structural diagram of a guard according to some yet other embodiments of this application;
FIG. 17 is a schematic front structural view of a cell according to some yet other embodiments of this application;
FIG. 18 is a schematic back structural view of a cell according to some yet other embodiments of this application;
FIG. 19 is a schematic front structural view of a cell according to some yet still other embodiments of this application;
FIG. 20 is a schematic back structural view of a cell according to some yet still other embodiments of this application;
FIG. 21 is a schematic structural diagram of a film coating structure of a cell according to some other embodiments of this application (in which a first covering region covers a first wall portion, and a second covering region has not been folded);
FIG. 22 is a schematic structural diagram of a film coating structure of a cell according to some embodiments of this application (in which a first covering region covers a first wall portion, and a second covering region covers a second wall portion); and
FIG. 23 is a schematic structural diagram of a film coating structure of a cell according to some embodiments of this application (in which an overlapping region is folded over on a first covering region).

Reference signs: 10-box body; 11-first part; 12-second part; 20-cell; 21-guard; 211-liquid outlet hole; 212-top wall; 2121-liquid-absorbing layer; 2122-first insulation layer; 2123-second insulation layer; 2124-first through-hole; 2125-adhesive layer; 2126-second through-hole; 213-peripheral wall; 214-convex portion; 215-avoidance hole; 216-first wall; 217-second wall; 218-third wall; 2191-main body portion; 2192-first flange portion; 2193-second flange portion; 2194-third flange portion; 2195-first covering region; 2196-second covering region; 2197-overlapping region; 22-can; 221-case; 2211-second wall portion; 2212-bottom wall; 222-end lid; 2221-groove; 2222-boss; 2223-vent hole; 223-connecting portion; 23-electrode assembly; 24-electrode terminal; 25-vent mechanism; 26-liquid injection hole; 27-vent patch; 100-battery; 200-controller; 300-motor; and 1000-vehicle.

### DETAILED DESCRIPTION

To make the objectives, technical solutions, and advantages of embodiments of this application clearer, the following clearly describes the technical solutions in the embodiments of this application with reference to the accompanying drawings in the embodiments of this application. Apparently, the described embodiments are some of the embodiments of this application rather than all the embodiments. All other embodiments obtained by a person of ordinary skill in the art based on the embodiments of this application without making creative efforts shall fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include", "have", and any other variants in the specification, claims, and description of accompanying drawings of this application mean to cover the non-exclusive inclusion. The terms "first", "second", and the like in the description and claims of this application or the above drawings are used to distinguish different objects, rather than to describe a specific order or primary and secondary relationship.

In this application, the phase "embodiment" mentioned means that the specific features, structures, or characteristics described with reference to the embodiments can be included in at least one embodiment of this application. The phrase appearing at various positions in this specification may neither necessarily mean a same embodiment, nor mean an independent or optional embodiment exclusive from another embodiment.

In the description of this application, it should be noted that unless otherwise explicitly specified or defined, the terms, such as "install", "connect", "connection", and "attach", should be understood in a broad sense. For example, the connection may be a fixed connection, a detachable connection, or an integral connection; or the connection may be a direct connection, an indirect connection through an intermediary, or internal communication between two components. A person of ordinary skill in the art may understand the specific meanings of the foregoing terms in this application according to specific situations.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates that the associated objects have an "or" relationship.

In the embodiments of this application, the same reference signs denote the same components, and for the sake of brevity, detailed descriptions of the same components are omitted in different embodiments. It should be understood that the thickness, length, width and other dimensions of various components in the embodiments of this application shown in the drawings, as well as the overall dimensions, such as a thickness, a length, and a width, of the integrated device are only exemplary descriptions, and should not constitute any limitation to this application.

The phrase "plurality of" appearing in this application means two or more (including two).

In this application, a cell may include a lithium ion secondary cell, a lithium ion primary cell, a lithium sulfur cell, a sodium lithium ion cell, a sodium ion cell, a magnesium ion cell, or the like, which is not limited in the embodiments of this application. The cell may be cylindrical, flat, rectangular, or in other shapes, which is also not limited in the embodiments of this application. Cells are generally categorized into three types depending on their packaging manners, including cylindrical cells, rectangular cells, and pouch cells, which are not limited in the embodiments of this application.

A battery mentioned in the embodiments of this application refers to a single physical module including one or more cells to provide a higher voltage and a higher capacity. For example, the battery provided in this application may include a battery module, a battery pack, or the like. The battery generally includes a box body for packaging one or more cells. The box body can prevent liquids or other foreign objects from affecting the charging or discharging of the cells.

The cell includes an electrode assembly and an electrolytic solution, where the electrode assembly includes a positive electrode plate, a negative electrode plate, and a separator. The cell works mainly depending on movement of metal ions between the positive electrode plate and the negative electrode plate. The positive electrode plate includes a positive electrode current collector and a positive electrode active material layer. A surface of the positive electrode current collector is coated with the positive electrode active material layer. For the positive electrode current collector, a part uncoated with the positive electrode active material layer protrudes from a part coated with the positive electrode active material layer, and the part uncoated with the positive electrode active material layer serves as a negative electrode tab. By using the lithium-ion battery as an example, a material of the positive electrode current collector may be aluminum, and a positive electrode active material may be lithium cobalt oxide, lithium iron phosphate, ternary lithium, lithium manganese oxide, or the like. The negative electrode plate includes a negative electrode current collector and a negative electrode active material layer. A surface of the negative electrode current collector is coated with the negative electrode active material layer. For the negative electrode current collector, a part uncoated with the negative active material layer protrudes from a part coated with the negative active material layer, and the part uncoated with the negative electrode active material layer serves as a negative electrode tab. The material of the negative electrode current collector may be copper, and the negative electrode active material may be carbon, silicon, or the like. To ensure that no fusing occurs when a large current passed through, there are a plurality of positive electrode tabs, and the positive electrode tabs are laminated, and there are a plurality of negative electrode tabs, and the negative electrode tabs are laminated. A separator may be made of polypropylene (PP), polyethylene (PE), or the like. In addition, the electrode assembly may be a wound structure or a laminated structure, which is not limited in the embodiments of this application.

Currently, the market trend shows that batteries are applied more extensively. Batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for batteries keeps soaring with the increase of the application fields of the batteries.

For the development of battery technologies, various design factors, for example, performance parameters such as a battery life, an energy density, a discharge capacity, and a charge-discharge rate, all need to be taken into account. In addition, safety of a battery also needs to be taken into account. However, safety of the existing batteries is poor.

It is found by the inventor through research that a cell includes a case and an end lid. The case has an opening. The end lid is connected to the case and closes the opening. An electrolytic solution is prone to leaking from a connection position between the case and the end lid, and the leaked electrolytic solution is prone to causing a short circuit of the cell, or is prone to being ignited by high-voltage ignition when the electrolytic solution flows to a high-voltage region, resulting in a safety accident. Leakage of the electrolytic solution from the connection position between the case and the end lid is particularly prominent when the cell is used upside down, resulting in poor safety of the battery.

In view of this, an embodiment of this application provides a cell. The cell includes a can and a guard. The can includes a case and an end lid. The case has an opening. The end lid is connected to the case and closes the opening. The end lid is connected to the case to form a connecting portion. The guard is arranged on an outer surface of the can and covers at least a part of the connecting portion.

The guard is arranged on the cell, and the guard covers at least a part of the connecting portion. The guard can prevent liquid from leaking from the connecting portion to some extent, and lower a liquid leakage speed, thereby improving safety of the cell to some extent.

The technical solution described in the embodiments of this application is applicable to a battery and an electric device using the battery.

The electrical device may be a vehicle, a mobile phone, a portable device, a laptop computer, a ship, a spacecraft, an electric toy, an electric tool, and the like. The spacecraft includes an airplane, a rocket, a space shuttle, a spaceship, and the like. The electric toy includes a fixed or mobile electric toy, for example, a game console, an electric car toy, an electric ship toy, and an electric airplane toy. The electric tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The embodiments of this application do not impose special limitations on the foregoing electrical device.

In the following embodiments, a vehicle 1000 is taken as an example of the electric device for the convenience of description.

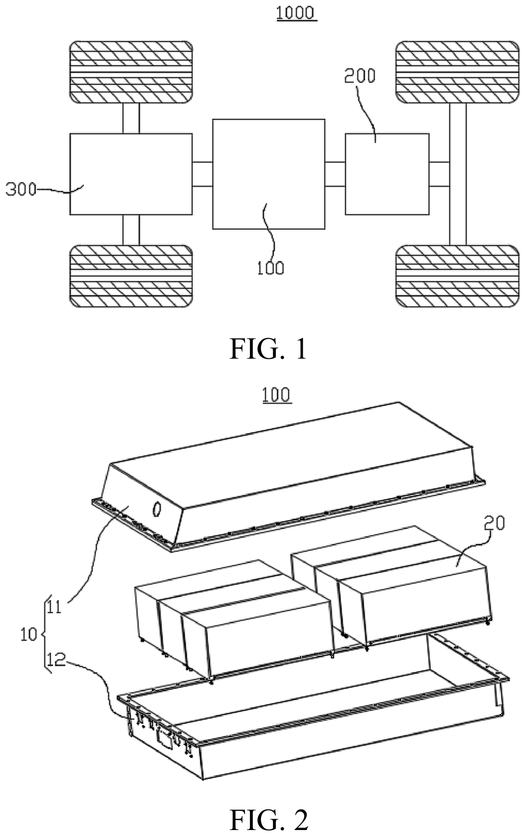

Referring to FIG. 1, FIG. 1 is a schematic structural diagram of a vehicle 1000 according to some embodiments of this application. The vehicle 1000 may be a fuel powered vehicle, a gas powered vehicle, or a new energy vehicle. The new energy vehicle may be a pure electric vehicle, a hybrid electric vehicle, an extended-range vehicle, or the like. A battery 100 is arranged inside the vehicle 1000, and the battery 100 may be arranged at the bottom, the head, or the tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of this application, the battery 100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, FIG. 2 is an exploded view of a battery 100 according to some embodiments of this application. The battery 100 may include a box body 10 and a cell 20, where the cell 20 is accommodated in the box body 10. The box body 10 is configured to provide an accommodating space for the cell 20. The box body 10 may be of a variety of structures. In some embodiments, the box body 10 may include a first part 11 and a second part 12. The first part 11 and the second part 12 cover each other, so that the first part 11 and the second part 12 jointly define an accommodating space for accommodating the cell 20. The second part 12 may be of a hollow structure with one end open, the first part 11 is a plate-shaped structure, and the first part 11 covers the opening side of the second part 12, so that the first part 11 and the second part 12 together define the accommodating space. The first part 11 and the second part 12 may alternatively be of a hollow structure with one side open, and the opening side of the second part 12 covers the opening side of the first part 11. Certainly, the box body 10 formed by the first part 11 and the second part 12 may be in various shapes such as a cylinder and a cuboid.

In the battery 100, there may be a plurality of cells 20, and a plurality of cells 20 can be connected in series, parallel, or series-parallel. Series-parallel connection means that both series connection and parallel connection exist among the plurality of cells 20. The plurality of cells 20 may be directly connected in series, parallel, or series-parallel, and then a whole formed by the plurality of cells 20 is accommodated in the box body 10. Certainly, the battery 100 may be a whole formed by connecting the plurality of cells 20 in series, parallel, or parallel-series first for combination in a form of a battery module, and then, connecting a plurality of battery modules in series, parallel, or parallel-series, and is accommodated in the box body 10. The battery 100 may further include other structures, for example, the battery 100 may also include a busbar component for achieving electrical connection between a plurality of cells 20.

Each cell 20 may be a secondary cell or a primary cell, and may be a lithium-sulfur cell, a sodium-ion cell, or a magnesium-ion cell, but is not limited thereto. The cell 20 may be cylindrical, flat, cuboid, or in other shapes and the like.

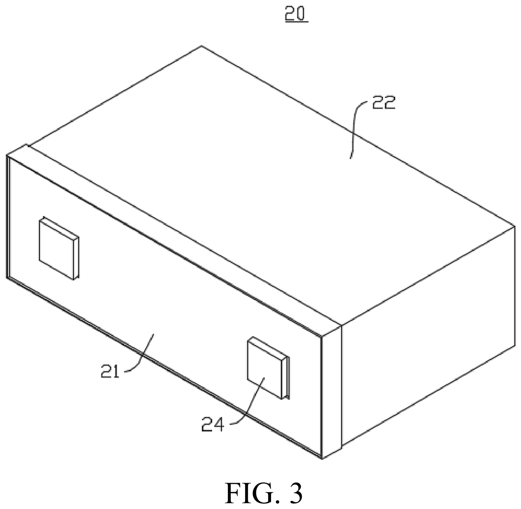

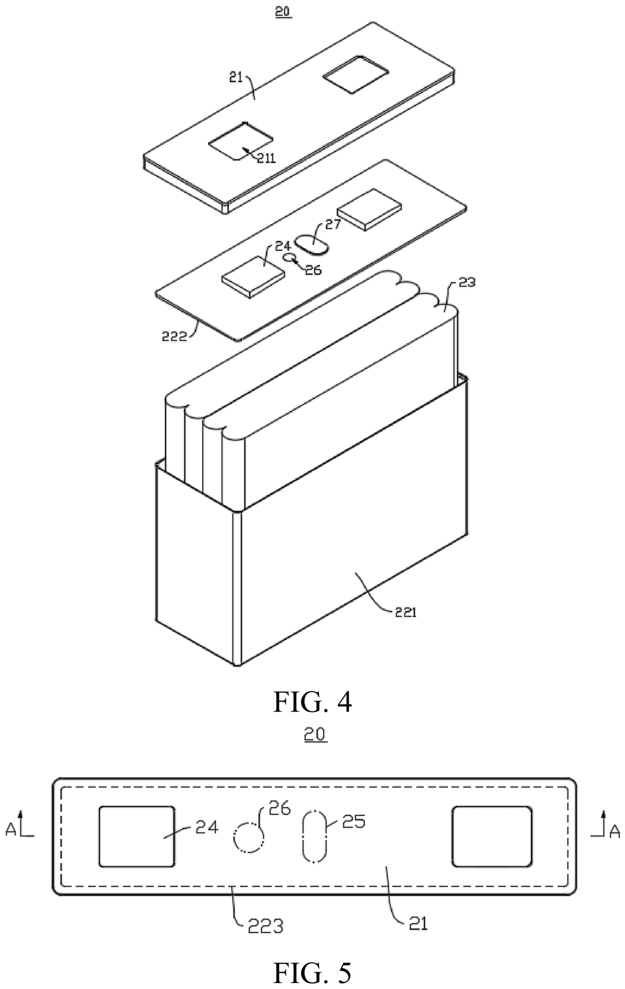

Reference is made to FIG. 3, FIG. 4, and FIG. 5. FIG. 3 is a schematic structural diagram of a cell 20 according to some embodiments of this application. FIG. 4 is an exploded view of a cell 20 according to some embodiments of this application. FIG. 5 is a schematic top view of a cell 20 according to some embodiments of this application. An embodiment of this application provides a cell 20. The cell 20 includes a can 22 and a guard 21. The can 22 includes a case 221 and an end lid 222. The case 221 has an opening. The end lid 222 is connected to the case 221 and closes the opening. The end lid 222 is connected to the case 221 to form a connecting portion 223. The guard 21 is arranged on an outer surface of the can 22 and covers at least a part of the connecting portion 223.

The cell 20 refers to a smallest unit constituting a battery 100.

The can 22 includes the end lid 222 and the case 221. The case 221 has an accommodating space that is open at one end. The accommodating space is for accommodating an electrode assembly 23. The end lid 222 is connected to the case 221 and closes the opening.

The end lid 222 refers to a component that covers an opening of the case 221 to isolate an internal environment of the cell 20 from an external environment. A shape of the end lid 222 is not limited and may be adapted to a shape of the case 221 to fit the case 221. Optionally, the end lid 222 may be made of a material with specified hardness and strength (for example, aluminum alloy), so that the end lid 222 is less likely to deform under extrusion and collision, enabling the cell 20 to have higher structural strength and enhanced safety performance. The end lid 222 may also be made of various materials, such as copper, iron, aluminum, stainless steel, aluminum alloy, and plastic, which are not particularly limited in the embodiments of this application. In some embodiments, the cell 20 further includes an insulator. The insulator is arranged on an inner side of the end lid 222. The insulator may be configured to isolate electrical connection components in the case 221 from the end lid 222, to reduce a risk of a short circuit. For example, the insulator may be made of plastic, rubber, or the like.

The case 221 is a component configured to form, together with the end lid 222, an internal environment of the cell 20, where the formed internal environment may be for accommodating the electrode assembly 23, an electrolytic solution, and other components. The case 221 and the end lid 222 may be independent components, an opening may be provided on the case 221, and the end lid 222 covers the opening to form the internal environment of the cell 20. Without limitation, the end lid 222 and the case 221 may alternatively be integrated. Specifically, the end lid 222 and the case 221 may form a common joint surface before other components are placed into the case 221, and then the end lid 222 covers the case 221 when the interior of the case 221 needs to be enclosed. The case 221 may be of various shapes and sizes, such as a rectangular shape, a cylindrical shape, and a hexagonal prism shape. Specifically, the shape of the case 221 may be determined based on a specific shape and size of an electrode assembly 23. The case 221 may be made of various materials, such as copper, iron, aluminum, stainless steel, aluminum alloy, and plastic, which are not particularly limited in the embodiments of this application.

The end lid 222 is connected to the case 221 to form the connecting portion 223. For example, when the end lid 222 is welded to the case 221, the connecting portion 223 is a weld joint. Referring to FIG. 5, FIG. 5 shows a position of the connecting portion 223 by using dashed lines.

That "the guard 21 is arranged on an outer surface of the can 22 and covers at least a part of the connecting portion 223" may also be understood as that the guard 21 covers at least a part of the connecting portion 223 from the outer surface of the can 22. The outer surface of the can 22 is a surface of the can 22 facing away from the accommodating space thereof. An inner surface of the can 22 is a surface of the can 22 facing the accommodating space thereof.

That the guard 21 covers the connecting portion 223 means that the guard 21 blocks an outer surface of the connecting portion 223. When the end lid 222 is welded to the case 221, the guard 21 blocks an outer surface of the weld joint.

The guard 21 may cover a part of the connecting portion 223, or may completely cover the connecting portion 223.

The guard 21 is arranged on the cell 20, and the guard 21 covers at least a part of the connecting portion 223. The guard 21 can prevent liquid from leaking from the connecting portion 223 to some extent, and lower the liquid leakage speed, thereby improving the safety of the cell 20 to some extent.

In some embodiments, the guard 21 is configured to guide the liquid leaking from the connecting portion 223 to flow out from a preset position of the guard 21.

The guard 21 can guide the liquid leaking from the connecting portion 223 to flow out from the preset position, to prevent the liquid from flowing around and causing a safety accident.

In this embodiment of this application, the liquid may be at least one of an electrolytic solution, an additive, and a condensate.

When liquid leakage occurs at the connecting portion 223, the guard 21 can guide liquid leaking from the connecting portion 223 to flow out from the preset position of the guard 21, to prevent the liquid from flowing around and causing a short-circuit fire or ignition by a high voltage, which is conducive to improving the safety of the cell 20.

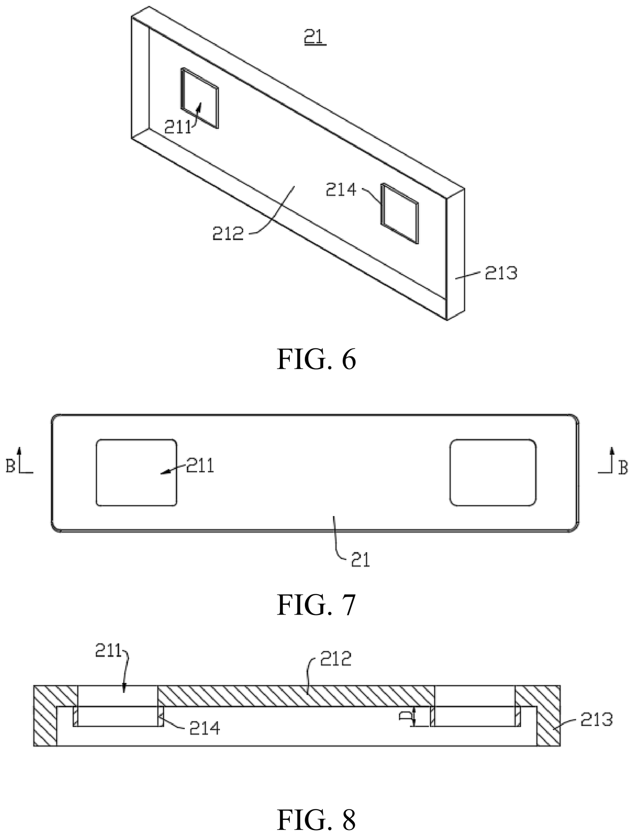

Reference is made to FIG. 4, FIG. 5, FIG. 6, FIG. 7. FIG. 8, FIG. 6 is a schematic structural diagram of a guard 21 according to some embodiments of this application. FIG. 7 is a schematic top view of a guard 21 according to some embodiments of this application. FIG. 8 is a cross-sectional view of a position B-B in FIG. 7. In some embodiments, the guard 21 is provided with a liquid outlet hole 211, and the liquid outlet hole 211 is for liquid to flow out of the guard 21.

The liquid outlet hole 211 is a through-hole provided on the guard 21. The liquid outlet hole 211 runs through a surface of the guard 21 facing the can 22 and a surface of the guard 21 facing away from the can 22, so that liquid leaking from the connecting portion 223 can flow out of the guard 21 through the liquid outlet hole 211.

A quantity of liquid outlet holes 211 is not limited. There may be one, two, or more than two liquid outlet holes 211.

The liquid outlet hole 211 is the preset position of the guard 21. When liquid leakage occurs at the connecting portion 223, the guard 21 can guide liquid leaking from the connecting portion 223 to flow out from the liquid outlet hole 211. The liquid flowing out from the liquid outlet hole 211 can be collected or treated by another structure in the battery 100, to prevent the liquid from flowing around and causing a short-circuit fire or ignition by a high voltage, which is conducive to improving the safety of the cell 20.

In some embodiments, the guard 21 includes a top wall 212. The top wall 212 covers an outer surface of the end lid 222 and at least a part of the connecting portion 223, and the top wall 212 is provided with a liquid outlet hole 211.

That "the top wall 212 covers an outer surface of the end lid 222 and at least a part of the connecting portion 223" means that the top wall 212 snugly fits the outer surface of the end lid 222, and the top wall 212 is in contact with at least a part of the connecting portion 223.

When liquid leakage occurs at the connecting portion 223, the guard 21 can guide liquid leaking from the connecting portion 223 to flow out from the liquid outlet hole 211. The liquid flowing out from the liquid outlet hole 211 can be collected or treated by another structure in the battery 100, to prevent the liquid from flowing around and causing a short-circuit fire or ignition by a high voltage, which is conducive to improving the safety of the cell 20.

Referring to FIG. 3, FIG. 4, FIG. 5, FIG. 6, FIG. 7, and FIG. 8, in some embodiments, the guard 21 includes the top wall 212 and a peripheral wall 213. The top wall 212 covers the outer surface of the end lid 222, and the peripheral wall 213 is arranged around an outer edge of the top wall 212. The peripheral wall 213 covers at least a part of an outer peripheral surface of the case 221.

The top wall 212 is a part that is in the guard 21 and that covers the outer surface of the end lid 222. The peripheral wall 213 is a part arranged around the top wall 212. The top wall 212 and the peripheral wall 213 can enclose an accommodating space for accommodating liquid.

The top wall 212 may snugly fit the end lid 222. In this case, the top wall 212 may snugly fit the connecting portion 223. Alternatively, a gap may be provided between the top wall 212 and the end lid 222. In this case, a gap may be provided between the top wall 212 and the connecting portion 223.

In the embodiment shown in FIG. 3, the connecting portion 223 is located at an end of the can 22, the top wall 212 covers the connecting portion 223, and the peripheral wall 213 fits an outer surface of the case 221.

In some other embodiments, the connecting portion 223 is arranged around an outer peripheral surface of the can 22. In this case, the peripheral wall 213 covers the connecting portion 223, and the top wall 212 fits the outer surface of the end lid 222.

The top wall 212 and the peripheral wall 213 enclose the accommodating space. When liquid leakage occurs at the connecting portion 223, liquid first gathers in the accommodating space and then is drained from the liquid outlet hole 211, so that the liquid leaking from the connecting portion 223 is guided to flow out from the preset position of the guard 21, to prevent the liquid from flowing around and causing a short-circuit fire or ignition by a high voltage, which is conducive to improving the safety of the cell 20.

Referring to FIG. 3, FIG. 4, FIG. 5, FIG. 6, FIG. 7, and FIG. 8, in some embodiments, the liquid outlet hole 211 is provided on the top wall 212.

The liquid outlet hole 211 extends through a surface of the top wall 212 facing the end lid 222 and a surface of the top wall 212 facing away from the end lid 222.

Compared with providing the liquid outlet hole 211 on the peripheral wall 213, providing the liquid outlet hole 211 on the top wall 212 in a scenario in which the cell 20 is used upside down makes it more easy to control flowing of liquid (if the liquid outlet hole 211 is provided on the peripheral wall 213, liquid flowing out from the liquid outlet hole 211 can still flow to the top wall 212, and flowing of the liquid is less likely to be controlled).

In some other embodiments, the liquid outlet hole 211 is provided on the peripheral wall 213. When the cell 20 is used upright, providing the liquid outlet hole 211 on the peripheral wall 213 can reduce occupation on space in a height direction of the box body 10.

Referring to FIG. 6, FIG. 7, and FIG. 8, in some embodiments, a convex portion 214 is convexly arranged on a side of the guard 21 facing the can 22, and the convex portion 214 is arranged around the liquid outlet hole 211.

The convex portion 214 is a convex structure protruding from the side of the guard 21 facing the can 22. A gap is provided between the convex portion 214 and the can 22, so that liquid can enter the liquid outlet hole 211 from the gap, to flow out of the guard 21.

The convex portion 214 is an annular protrusion, and the convex portion 214 is arranged around an outer side of the liquid outlet hole 211.

By arranging the convex portion 214 around the liquid outlet hole 211, a speed at which liquid flows out of the guard 21 is lowered, to prevent the liquid from spreading to another position due to an excessively high speed at which the liquid flows out of the guard 21.

Referring to FIG. 6, FIG. 7, and FIG. 8, in some embodiments, a height by which the convex portion 214 protrudes from the guard 21 is D, satisfying: 0.1 mm≤D≤0.5 mm.

The guard 21 has a first surface facing the can 22, and the convex portion 214 is convexly arranged on the first surface. The convex portion 214 has a second surface facing the can 22. The height by which the convex portion 214 protrudes from the guard 21 is a distance between the first surface and the second surface.

A value of the height by which the convex portion 214 protrudes from the guard 21 may be: D=0.1 mm, 0.15 mm, 0.2 mm, 0.25 mm, 0.3 mm, 0.35 mm, 0.4 mm, 0.45 mm, 0.5 mm, or the like.

The height by which the convex portion 214 protrudes from the guard 21 is limited to a range of 0.1 to 0.5 mm, which greatly slows down the liquid flowing out of the guard 21 without significantly increasing the height of the guard 21, thereby helping to reduce space occupation by the guard 21 and improving the energy density of the battery 100. If D<0.1 mm, the height by which the convex portion 214 protrudes from the guard 21 is small, and an effect of slowing down the liquid flowing out of the guard 21 is poor. If D>0.5 mm, the guard 21 occupies a large space, which is not conducive to improving the energy density of the battery 100.

In some embodiments, a height by which the peripheral wall 213 protrudes from the side of the top wall 212 facing the can 22 is greater than a height by which the convex portion 214 protrudes from the side of the top wall 212 facing the can 22, so that when the peripheral wall 213 fits the outer peripheral surface of the case 221, a gap is provided between the convex portion 214 and the end lid 222.

In some embodiments, an accommodating space is formed in the guard 21 for accommodating liquid, and the connecting portion 223 is at least partially located in the accommodating space. The liquid outlet hole 211 is in communication with the accommodating space.

Referring to FIG. 6, FIG. 7, and FIG. 8, the top wall 212 and the peripheral wall 213 jointly enclose the accommodating space for accommodating liquid, and the end lid 222, the connecting portion 223, and a part of the case 221 are located in the accommodating space. The liquid outlet hole 211 provided on the top wall 212 is in communication with the accommodating space.

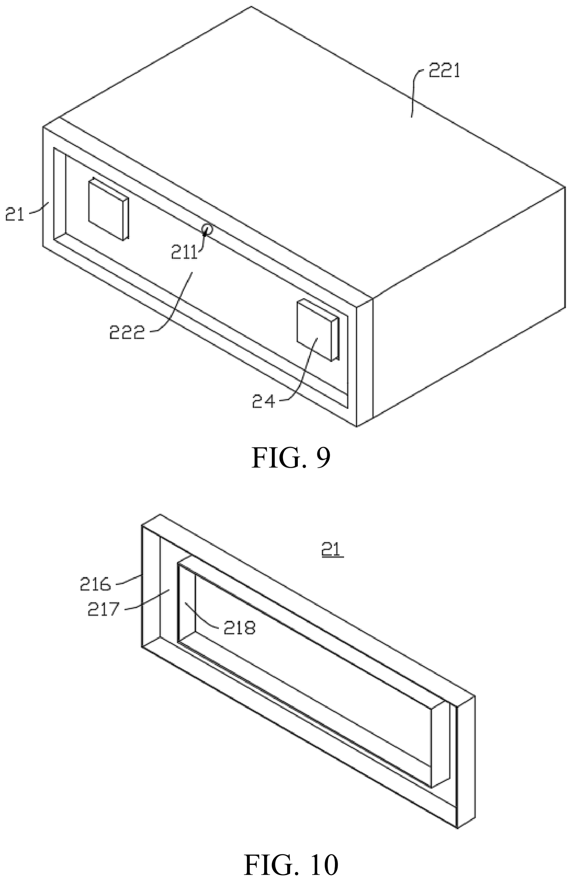

Reference is made to FIG. 9 and FIG. 10. FIG. 9 is a schematic structural diagram of a cell 20 according to some other embodiments of this application. FIG. 10 is a schematic structural diagram of a guard 21 according to some other embodiments of this application. In some other embodiments, an accommodating space for accommodating liquid is formed in the guard 21, and the connecting portion 223 is completely accommodated in the accommodating space. The guard 21 is provided with a liquid outlet hole 211 in communication with the accommodating space.

The accommodating space is formed in the guard 21, and the liquid outlet hole 211 is in communication with the accommodating space. In this way, liquid leaking from the connecting portion 223 first gathers in the accommodating space, and then is drained from the liquid outlet hole 211, to prevent the liquid from flowing around and causing a short-circuit fire or ignition by a high voltage, which is conducive to improving the safety of the cell 20.

Referring to FIG. 9 and FIG. 10, in some other embodiments, the guard 21 includes a first wall 216, a second wall 217, and a third wall 218 that are sequentially connected. The second wall 217 is annular, and the second wall 217 and the connecting portion 223 are oppositely arranged. The first wall 216 and the third wall 218 are oppositely arranged on two sides of the second wall 217 in a width direction. One of the first wall 216 and the third wall 218 is connected to the case 221, and the other of the first wall 216 and the third wall 218 is connected to the end lid 222. The first wall 216, the second wall 217, and the third wall 218 jointly define the accommodating space.

The first wall 216, the second wall 217, and the third wall 218 all extend along an annular track, to jointly enclose the accommodating space.

The first wall 216, the second wall 217, and the third wall 218 enclose a U-shaped structure. An open end of the U-shaped structure faces the connecting portion 223, to accommodate the connecting portion 223 in the accommodating space.

The liquid outlet hole 211 may be arranged on any one of the first wall 216, the second wall 217, and the third wall 218. When a plurality of liquid outlet holes 211 are provided, the plurality of liquid outlet holes 211 may be distributed on the first wall 216, the second wall 217, or the third wall 218. In the embodiments shown in FIG. 9 and FIG. 10, a liquid outlet hole 211 is provided, and the liquid outlet hole 211 is arranged in a second wall 217.

The first wall 216, the second wall 217, and the third wall 218 jointly define the accommodating space, and the connecting portion 223 is accommodated in the accommodating space. In this way, liquid leaking from the connecting portion 223 first gathers in the accommodating space, and then is drained from the liquid outlet hole 211, to prevent the liquid from flowing around and causing a short-circuit fire or ignition by a high voltage, which is conducive to improving the safety of the cell 20.

Referring to FIG. 3, FIG. 4, and FIG. 5 again, in some embodiments, the cell 20 further includes a vent mechanism 25, and the vent mechanism 25 is arranged on the end lid 222 or the case 221. The guard 21 covers the vent mechanism 25, and the guard 21 is configured to guide liquid leaking from the vent mechanism 25 to flow out from a preset position of the guard 21.

The vent mechanism 25 is a component configured to open to vent an internal pressure of the cell 20 when the internal pressure or a temperature of the cell 20 reaches an initiation pressure. Referring to FIG. 5, the vent mechanism 25 is shown in FIG. 5 by using a dash-dotted line.

The vent mechanism 25 may be provided on the end lid 222, or may be provided on the case 221. In this embodiment of this application, the vent mechanism 25 is arranged on the end lid 222. The vent mechanism 25 may be welded to the end lid 222. Liquid may leak from a weak region of the vent mechanism 25, or may leak from a connection position between the vent mechanism 25 and the end lid 222, both of which are leaking from the vent mechanism 25.

The guard 21 covers the vent mechanism 25 and also covers the connection position between the vent mechanism 25 and the end lid 222, so that when liquid leaks from the vent mechanism 25, the guard 21 can guide the liquid to flow out from the preset position.

The vent mechanism 25 is also a weak position, and liquid is prone to leaking from the vent mechanism 25. By covering the vent mechanism 25 with the guard 21, when liquid leakage occurs at the vent mechanism 25, the guard 21 can guide liquid leaking from the vent mechanism 25 to flow out from the preset position of the guard 21, to prevent the liquid from flowing around and causing a short-circuit fire or ignition by a high voltage, which is conducive to improving the safety of the cell 20.

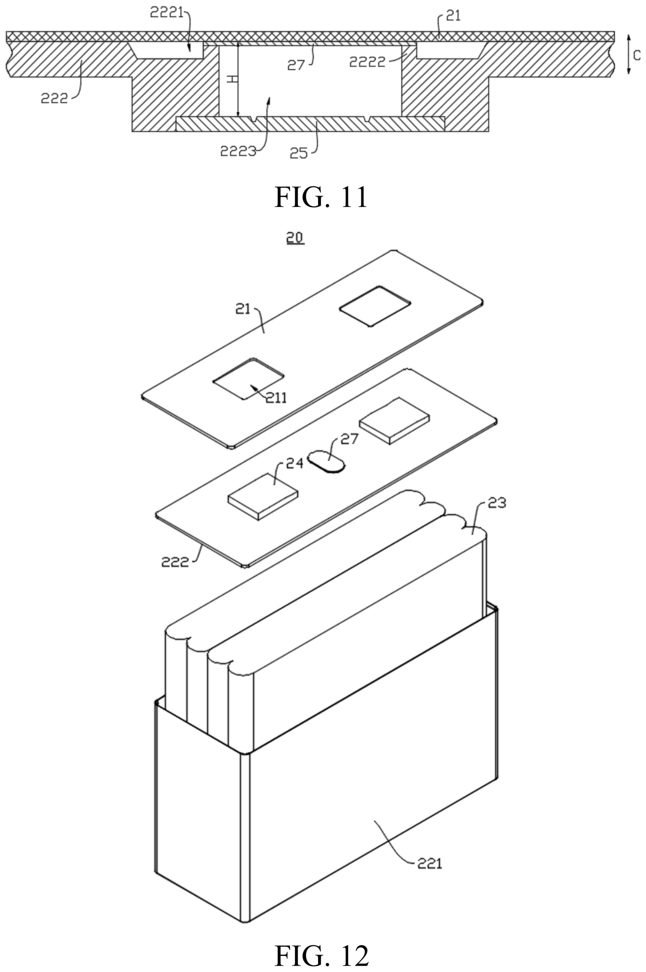

Reference is made to FIG. 5 and FIG. 11. FIG. 11 is a cross-sectional view of a position A-A in FIG. 5. In some embodiments, the vent mechanism 25 is arranged on the end lid 222, and a gap is provided between the vent mechanism 25 and the guard 21 along a thickness direction of the end lid 222.

In some embodiments, a side of the end lid 222 facing the interior of the cell 20 is provided with a protrusion, and a vent hole 2223 is provided on the protrusion. The vent mechanism 25 is arranged on a side of the protrusion facing the interior of the cell 20.

A surface of the end lid 222 facing away from the interior of the cell 20 is provided with a groove 2221, and a position of the groove 2221 corresponds to a position of the protrusion. A boss 2222 is convexly arranged on a bottom wall of the groove 2221. The vent hole 2223 runs through a surface of the boss 2222 facing away from the interior of the cell 20 and a surface of the protrusion facing the interior of the cell 20. The cell 20 further includes a vent patch 27. The vent patch 27 is adhered to the surface of the boss 2222 facing away from the interior of the cell 20. The vent patch 27 and the vent mechanism 25 are oppositely arranged. A surface of the vent patch 27 facing away from the interior of the cell 20 is flush with the surface of the end lid 222 facing away from the interior of the cell 20. The guard 21 fits the surface of the end lid 222 facing away from the interior of the cell 20 and the surface of the vent patch 27 facing away from the interior of the cell 20.

It should be noted that the boss 2222 is provided with a gas vent along a radial direction of the vent hole 2223, to allow gas to flow from the vent hole 2223 to the groove 2221 through the boss 2222.

Through the foregoing design, a gap can be provided between the vent mechanism 25 and the guard 21. In some other embodiments, a gap is provided between the guard 21 and the surface of the end lid 222 facing away from the interior of the cell 20 along a thickness direction of the end lid 222, which can also provide a gap between the vent mechanism 25 and the guard 21.

Referring to FIG. 11, the thickness direction of the end lid 222 is a direction C shown in FIG. 11.

When an internal pressure or temperature of the cell 20 reaches an initiation pressure, the vent mechanism 25 opens to vent. A gap is provided between the vent mechanism 25 and the guard 21 along the thickness direction, to allow the vent mechanism 25 to open, thereby preventing the vent mechanism 25 from failing to open to vent because the guard 21 blocks the vent mechanism 25.

In some embodiments, when the cell 20 vents, high-temperature gas discharged from the vent mechanism 25 melts the guard 21, so that the vent mechanism 25 can quickly vent.

Referring to FIG. 5 and FIG. 11, in some embodiments, a dimension of the gap along the thickness direction is H, satisfying: H≥1.5 mm.

Along the thickness direction, the vent mechanism 25 has a third surface facing the guard 21, and the guard 21 has a fourth surface facing the vent mechanism 25. The dimension of the gap along the thickness direction is a minimum distance between the third surface and the fourth surface along the thickness direction.

A value of the dimension of the gap along the thickness direction may be: H=1.5 mm, 2 mm, 2.5 mm, 3 mm, 3.5 mm, 4 mm, or the like.

The dimension of the gap along the thickness direction is made greater than 1.5 mm, to allow the vent mechanism 25 to open by a large range, so that when an internal pressure or temperature of the cell 20 reaches an initiation pressure, the vent mechanism 25 can smoothly vent.

Referring to FIG. 3, FIG. 4, and FIG. 5 again, in some embodiments, the cell 20 further includes a liquid injection hole 26 and a sealing member. The liquid injection hole 26 is provided on the end lid 222, and the sealing member is configured to seal the liquid injection hole 26. The guard 21 covers the liquid injection hole 26 and the sealing member, and the guard 21 is configured to guide liquid leaking from the liquid injection hole 26 to flow out from a preset position of the guard 21.

Referring to FIG. 5, the liquid injection hole 26 is shown by using a dash-double-dotted line in FIG. 5.

The liquid injection hole 26 is a through-hole provided on the end lid 222, and the liquid injection hole 26 is for injecting an electrolytic solution into the cell 20. The sealing member is a component configured to seal the liquid injection hole 26. After being sealed by the sealing member, liquid in the cell 20 is less likely to leak from the liquid injection hole 26 when the cell 20 is used upright. Generally, the sealing member is a sealing pin.

Although the liquid injection hole 26 is sealed by the sealing member, the liquid injection hole is also a weak position in a scenario in which the cell 20 is placed upside down, and liquid is prone to leaking from the liquid injection hole 26. By covering the liquid injection hole 26 and the sealing member with the guard 21, when liquid leakage occurs at the liquid injection hole 26, the guard 21 can guide liquid leaking from the liquid injection hole 26 to flow out from the preset position of the guard 21, to prevent the liquid from flowing around and causing a short-circuit fire or ignition by a high voltage, which is conducive to improving the safety of the cell 20.

In some other embodiments, the guard 21 is configured to store liquid leaking from the connecting portion 223.

The guard 21 can store the liquid leaking from the connecting portion 223, to prevent the liquid from flowing around and causing a safety accident.

The liquid may be at least one of an electrolytic solution, an additive, and a condensate.

When liquid leakage occurs at the connecting portion 223, the guard 21 can store liquid leaking from the connecting portion 223, to prevent the liquid from flowing around and causing a short-circuit fire or ignition by a high voltage, which is conducive to improving the safety of the cell 20.

In some embodiments, the guard 21 is configured to absorb liquid leaking from the connecting portion 223.

The guard 21 has a liquid absorbing capability, to absorb the liquid leaking from the connecting portion 223.

When liquid leakage occurs at the connecting portion 223, the guard 21 can absorb liquid leaking from the connecting portion 223, to prevent the liquid from flowing around and causing a short-circuit fire or ignition by a high voltage, which is conducive to improving the safety of the cell 20.

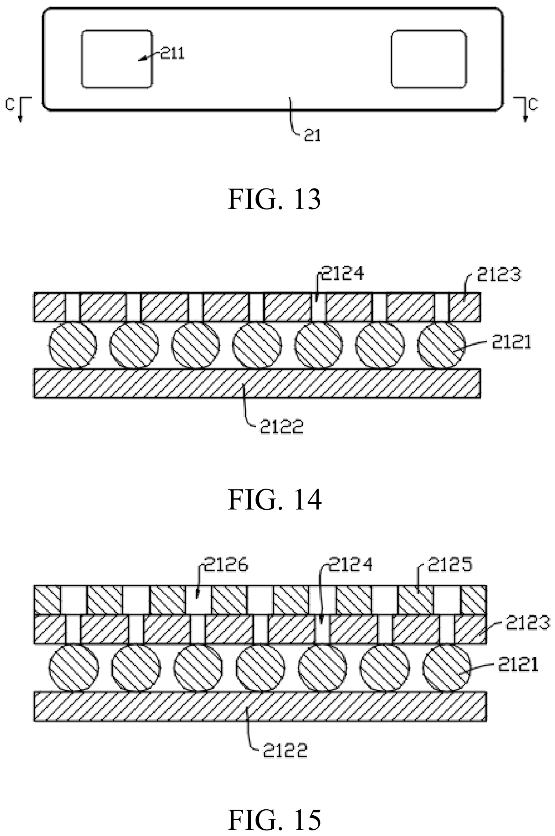

Reference is made to FIG. 12, FIG. 13, and FIG. 14. FIG. 12 is an exploded view of a cell 20 according to some still other embodiments of this application. FIG. 13 is a schematic top view of a guard 21 according to some still other embodiments of this application. FIG. 14 is a cross-sectional view of a position C-C in FIG. 13. In some embodiments, the guard 21 includes a liquid-absorbing layer 2121 and a first insulation layer 2122. The liquid-absorbing layer 2121 is configured to absorb liquid, and the first insulation layer 2122 is located on a side of the liquid-absorbing layer 2121 facing away from the connecting portion 223.

The liquid-absorbing layer 2121 has a liquid absorbing capability, to absorb the liquid leaking from the connecting portion 223.

The first insulation layer 2122 has an insulation property, and the first insulation layer 2122 is arranged on the side of the liquid-absorbing layer 2121 facing away from the connecting portion 223. The first insulation layer 2122 is further away from the connecting portion 223 than the liquid-absorbing layer 2121 is. The first insulation layer 2122 covers the liquid-absorbing layer 2121, to avoid a short circuit caused by contact between other components and the liquid-absorbing layer 2121.

In some embodiments, an area of the first insulation layer 2122 is larger than or equal to an area of the liquid-absorbing layer 2121, so that the first insulation layer 2122 can well isolate the liquid-absorbing layer 2121 from other components. The first insulation layer 2122 may be plastic, rubber, or the like. In some embodiments, the first insulation layer 2122 is made of polyethylene terephthalate.

The liquid-absorbing layer 2121 can absorb liquid, to prevent liquid leaking from the connecting portion 223 from flowing around and causing a short-circuit fire or ignition by a high voltage, which is conducive to improving the safety of the cell 20. The first insulation layer 2122 is arranged on the side of the liquid-absorbing layer 2121 facing away from the connecting portion 223. The first insulation layer 2122 can implement an insulation function, and reduce a risk that other components come into contact with the liquid-absorbing layer 2121 and cause occurrence of a short circuit. In addition, existence of the first insulation layer 2122 makes it difficult for an electrolytic solution absorbed by the liquid-absorbing layer 2121 to leak, thereby further improving the safety of the cell 20.

In some embodiments, the guard 21 further includes a second insulation layer 2123. The second insulation layer 2123 is located on a side of the liquid-absorbing layer 2121 facing the connecting portion 223, and the second insulation layer 2123 is configured to allow liquid to pass through.

The second insulation layer 2123 has an insulation property, and the second insulation layer 2123 is arranged on the side of the liquid-absorbing layer 2121 facing the connecting portion 223. The second insulation layer 2123 is closer to the connecting portion 223 than the liquid-absorbing layer 2121 is. The liquid-absorbing layer 2121 is arranged between the first insulation layer 2122 and the second insulation layer 2123.

The second insulation layer 2123 may be plastic, rubber, or the like. In some embodiments, the second insulation layer 2123 is made of polyethylene terephthalate.

That "the second insulation layer 2123 is configured to allow liquid to pass through" means that liquid leaking from the connecting portion 223 can enter the liquid-absorbing layer 2121 through the second insulation layer 2123.

By arranging the second insulation layer 2123, the liquid-absorbing layer 2121 is arranged between the first insulation layer 2122 and the second insulation layer 2123, which helps to arrange the guard 21 on the outer surface of the can 22. In addition, the second insulation layer 2123 can lower, to some extent, a speed at which liquid leaks from the connecting portion 223, so that liquid passing through the second insulation layer 2123 can be effectively absorbed by the liquid-absorbing layer 2121, which is conducive to improving the safety of the cell 20.

In some embodiments, a first through-hole 2124 is provided on the second insulation layer 2123.

The second insulation layer 2123 has a first surface facing the liquid-absorbing layer 2121 and a second surface facing away from the liquid-absorbing layer 2121. The first through-hole 2124 runs through the first surface and the second surface.

The first through-hole 2124 is provided on the second insulation layer 2123, so that liquid leaking from the connecting portion 223 enters the liquid-absorbing layer 2121 through the first through-hole 2124, and is absorbed by the liquid-absorbing layer 2121.

In some embodiments, a plurality of first through-holes 2124 are provided on the second insulation layer 2123, and the plurality of first through-holes 2124 are distributed on the second insulation layer 2123 at intervals, so that liquid leaking from the connecting portion 223 can enter the liquid-absorbing layer 2121 from the plurality of first through-holes 2124, which helps the liquid-absorbing layer 2121 to quickly absorb the leaked liquid.

Reference is made to FIG. 12, FIG. 13, FIG. 14, and FIG. 15. FIG. 15 is a schematic diagram of connecting a guard 21 to an adhesive layer 2125 according to some still other embodiments of this application. In some embodiments, the second insulation layer 2123 is connected to the case 221 and/or the end lid 222 by using an adhesive layer 2125, and at least a part of a projection of the adhesive layer 2125 does not overlap with a projection of the first through-hole 2124.

The adhesive layer 2125 has an adhesive function, and can adhere the second insulation layer 2123 to the case 221 and/or the end lid 222.

That "at least a part of a projection of the adhesive layer 2125 does not overlap with a projection of the first through-hole 2124" may be understood as that the adhesive layer 2125 cannot completely block the first through-hole 2124, or the adhesive layer 2125 avoids at least a part of the first through-hole 2124.

The second insulation layer 2123 is adhered to the case 221 and/or the end lid 222 by using the adhesive layer 2125, and the adhesive layer 2125 may hinder liquid from flowing toward the liquid-absorbing layer 2121. At least a part of a projection of the adhesive layer 2125 does not overlap with a projection of the first through-hole 2124, that is, the adhesive layer 2125 does not completely block the first through-hole 2124, so that liquid can bypass the adhesive layer 2125 and enter the liquid-absorbing layer 2121 through the first through-hole 2124.

In some embodiments, a second through-hole 2126 is provided on the adhesive layer 2125, and a position of the second through-hole 2126 corresponds to a position of the first through-hole 2124.

The adhesive layer 2125 has a third surface facing away from the second insulation layer 2123 and a fourth surface facing the second insulation layer 2123, and the second through-hole 2126 runs through the third surface and the fourth surface.

A diameter of the second through-hole 2126 may be larger than a diameter of the first through-hole 2124, may be equal to the diameter of the first through-hole 2124, or may be smaller than the diameter of the first through-hole 2124. At least a part of a projection of the second through-hole 2126 overlaps with the projection of the first through-hole 2124.

In some embodiments, the second through-hole 2126 and the first through-hole 2124 are coaxially arranged.

The second through-hole 2126 is provided on the adhesive layer 2125, to help liquid leaking from the connecting portion 223 to pass through the adhesive layer 2125 through the second through-hole 2126, and the liquid leaking from the connecting portion 223 can be absorbed by the liquid-absorbing layer 2121, thereby ensuring the safety of the cell 20.

In some embodiments, the second insulation layer 2123 is connected to the case 221 and/or the end lid 222 by using an adhesive layer 2125, and the adhesive layer 2125 is configured to be soluble by liquid.

Because the adhesive layer 2125 can be dissolved by liquid, liquid leaking from the connecting portion 223 can pass through the adhesive layer 2125 and then be absorbed by the guard 21. It should be noted that liquid leaking from the connecting portion 223 can only dissolve the adhesive layer 2125 near a leakage position without dissolving the entire adhesive layer 2125. Therefore, the connection between the guard 21 and the can 22 can be ensured.

In some embodiments, the guard 21 includes a liquid-absorbing material, where a volume of liquid absorbable by the liquid-absorbing material is at least three times of a volume of the liquid-absorbing material.

The liquid-absorbing material may include at least one of a sponge, carbon fibers, and an absorbent resin. The sponge, the carbon fibers, and the absorbent resin have strong liquid-absorbing capabilities, which helps to fully absorb liquid leaking from the connecting portion 223, and improves the safety of the cell 20.

The guard 21 is made of the liquid-absorbing material, to help the guard 21 to absorb liquid leaking from the connecting portion 223. Because a volume of free liquid in the cell 20 is limited, when the liquid-absorbing material can absorb liquid whose volume is at least three times a volume of the liquid-absorbing material, effective absorption of leaked liquid can be ensured.

In some other embodiments, an accommodating space for collecting liquid is formed in the guard 21, and the connecting portion 223 is at least partially located in the accommodating space.

The connecting portion 223 may be partially located in the accommodating space of the guard 21, or may be completely located in the accommodating space of the guard 21. In this way, when leaking from the connecting portion 223, the liquid can be stored in the accommodating space.

The accommodating space is formed in the guard 21, so that liquid leaking from the connecting portion 223 can be stored in the accommodating space, to prevent the liquid from flowing around and causing a short-circuit fire or ignition by a high voltage, which is conducive to improving the safety of the cell 20.

Optionally, the guard 21 includes a top wall 212 and a peripheral wall 213. The top wall 212 covers an outer surface of the end lid 222, and the peripheral wall 213 is arranged around an outer edge of the top wall 212. The peripheral wall 213 covers at least a part of an outer peripheral surface of the case 221. The top wall 212 and the peripheral wall 213 enclose an accommodating space.

The top wall 212 is a part that is in the guard 21 and that covers the outer surface of the end lid 222. The peripheral wall 213 is a part arranged around the top wall 212. The top wall 212 and the peripheral wall 213 can enclose an accommodating space for accommodating liquid.

In some embodiments, the connecting portion 223 is located at an end of the can 22, the top wall 212 covers the connecting portion 223, and the peripheral wall 213 fits an outer surface of the case 221.

In some other embodiments, the connecting portion 223 is arranged around an outer peripheral surface of the can 22. In this case, the peripheral wall 213 covers the connecting portion 223, and the top wall 212 fits the outer surface of the end lid 222.

The top wall 212 and the peripheral wall 213 enclose the accommodating space. When liquid leakage occurs at the connecting portion 223, the guard 21 can store liquid leaking from the connecting portion 223 in the accommodating space, to prevent the liquid from flowing around and causing a short-circuit fire or ignition by a high voltage, which is conducive to improving the safety of the cell 20.

In some embodiments, the cell 20 includes an electrode terminal 24. The electrode terminal 24 is arranged on the end lid 222. The guard 21 is provided with an avoidance hole 215 for avoiding the electrode terminal 24.

The electrode terminal 24 is a component configured to output or input electric energy of the cell 20.

The electrode terminal 24 extends out of the guard 21 through the avoidance hole 215, to be connected to a bus member or an electric device.

In an embodiment in which the guard 21 is configured to absorb liquid leaking from the connecting portion 223, the liquid leaking from the connecting portion 223 is absorbed, so that the liquid is less likely to flow out of the avoidance hole 215.

In an embodiment in which an accommodating space for collecting liquid is formed in the guard 21, the avoidance hole 215 is separated from the accommodating space, so that liquid does not flow out of the avoidance hole 215.

In some embodiments, the guard 21 completely covers the connecting portion 223.

The guard 21 completely covers the connecting portion 223. In this way, regardless of a specific position at which liquid leakage occurs at the connecting portion 223, the guard 21 can guide liquid to flow out from a preset position of the guard 21, to prevent the liquid from flowing around and causing a short-circuit fire or ignition by a high voltage, which is conducive to improving the safety of the cell 20.

In some embodiments, the guard 21 covers at least a part of the end lid 222 and at least a part of the case 221.

In the embodiments shown in FIG. 3 to FIG. 8, the guard 21 completely covers the end lid 222, and covers an end of the case 221 facing the guard 21 and a part of an outer peripheral surface of the case 221.

In the embodiments shown in FIG. 9 and FIG. 10, the guard 21 covers a part of the end lid 222 and covers an end of the case 221 facing the guard 21.

The guard 21 covers at least a part of the end lid 222 and at least a part of the case 221, to cover positions near the connecting portion 223. In this way, liquid leaking from the connecting portion 223 is less prone to flowing around and causing a short-circuit fire or ignition by a high voltage, which is conducive to improving the safety of the cell 20.

In some embodiments, the connecting portion 223 includes a first connecting region and a second connecting region. The first connecting region is connected to the second connecting region. A fusion depth of the first connecting region is smaller than a fusion depth of the second connecting region. The guard covers at least a part of the first connecting region.

The fusion depth is a distance from a surface of a weldment to a deepest part of a fusion region in a weld joint between the end lid 222 and the case 221.

The fusion depth of the first connecting region is a distance from a surface of the end lid 222 facing away from the interior of the cell 20 along a thickness direction of the end lid 222 to a position of the first connecting region that is farthest away from the foregoing surface and that faces the interior of the end lid 222. The fusion depth of the second connecting region is a distance from the surface of the end lid 222 facing away from the interior of the cell 20 along the thickness direction of the end lid 222 to a position of the second connecting region that is farthest away from the foregoing surface and that faces the interior of the end lid 222.

Because grains of a material change before and after welding, after the connecting portion 223 is cut open, traces of the first connecting region and the second connecting region can be clearly seen, and the fusion depths of the first connecting region and the second connecting region can be measured.

Strength of a weld joint is positively correlated to the fusion depth. A deeper fusion depth indicates higher strength of the weld joint.

The fusion depth of the first connecting region is smaller than the fusion depth of the second connecting region. Upon comparison, the first connecting region is more prone to breakage and liquid leakage. By covering at least a part of the first connecting region with the guard 21, the guard 21 can prevent liquid from leaking from the first connecting region to some extent, and lower the liquid leakage speed, thereby improving the safety of the cell 20 to some extent.

Referring to FIG. 3 to FIG. 8, in some embodiments, the cell 20 includes an electrode terminal 24. The electrode terminal 24 is arranged on the end lid 222, and the guard 21 covers the end lid 222 and avoids the electrode terminal 24.

The electrode terminal 24 is a component configured to output or input electric energy of the cell 20. The guard 21 avoids the electrode terminal 24, to help the electrode terminal 24 to be connected to a bus member or an electric device.

Because the electrode terminal 24 needs to output electric energy of the cell 20 or input electric energy to the cell 20, when the guard 21 is arranged on the end lid 222, the guard 21 needs to avoid the electrode terminal 24, to prevent the guard 21 from interfering with input or output of electric energy of the cell 20.

Referring to FIG. 3 to FIG. 8, in some embodiments, the guard 21 is provided with a liquid outlet hole 211. The guard 21 is configured to guide liquid leaking from the connecting portion 223 to flow out of the guard 21 from the liquid outlet hole 211. The electrode terminal 24 extends out of the guard 21 from the liquid outlet hole 211.

The guard 21 is provided with a through-hole for avoiding the electrode terminal 24 and the liquid outlet hole 211 configured to allow liquid to flow out of the guard 21. The liquid outlet hole 211 and the through-hole for avoiding the electrode terminal 24 are a same through-hole.

The liquid outlet hole 211 serves as both a preset position of the guard 21 and an extending position of the electrode terminal 24. One liquid outlet hole 211 implements two functions, which is conducive to simplifying the structure of the guard 21.

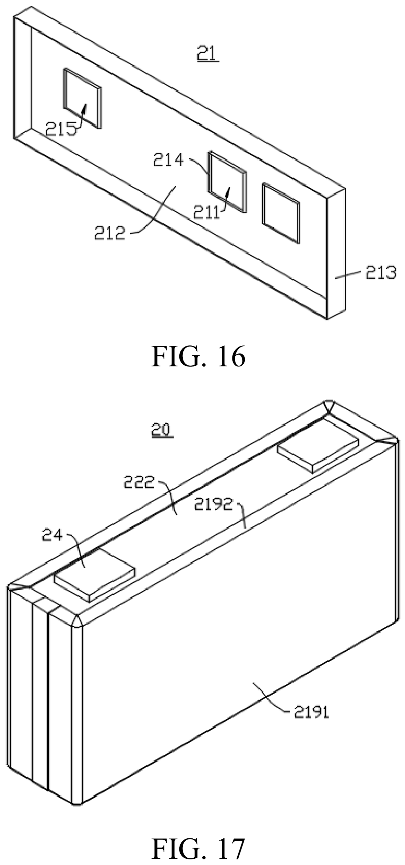

Referring to FIG. 16, FIG. 16 is a schematic structural diagram of a guard 21 according to some yet other embodiments of this application. In still another embodiment, in some embodiments, the guard 21 is provided with a liquid outlet hole 211. The guard 21 is configured to guide liquid leaking from the connecting portion 223 to flow out of the guard 21 from the liquid outlet hole 211. An avoidance hole 215 is further provided on the guard 21, and the liquid outlet hole 211 and the avoidance hole 215 are spaced apart. The electrode terminal 24 extends out of the guard 21 from the avoidance hole 215.

The avoidance hole 215 is a through-hole provided on the guard 21. The avoidance hole 215 runs through a surface of the guard 21 facing the can 22 and a surface of the guard 21 facing away from the can 22.

The liquid outlet hole 211 and the avoidance hole 215 are different through-holes.

The liquid outlet hole 211 serves as a preset position of the guard 21, and liquid flows out from the liquid outlet hole 211. The electrode terminal 24 extends out of the guard 21 from the avoidance hole 215. In this way, liquid outlet from the liquid outlet hole 211 and the electrode terminal 24 do not interfere with each other, and the additionally provided liquid outlet hole 211 has high flexibility.

In some embodiments, the cell 20 further includes an electrode assembly 23. The electrode assembly 23 is accommodated in the can 22. The end lid 222 is configured to support the electrode assembly 23 in a gravity direction.

The electrode assembly 23 is a component in the cell 20 that undergoes electrochemical reactions. The can 22 may include one or more electrode assemblies 23. The electrode assembly 23 is mainly formed by winding or laminating a positive electrode plate and a negative electrode plate, and a separator is generally arranged between the positive- electrode plate and the negative electrode plate. Parts of the positive electrode plate and the negative electrode plate with active materials constitute a main body portion of the electrode assembly 23, while parts of the positive electrode plate and the negative electrode plate without active materials respectively constitute tabs. A positive electrode tab and a negative electrode tab may be located at one end of the main body portion together or at two ends of the main body portion respectively. During charging and discharging of the cell 100, a positive electrode active material and a negative electrode active material react with an electrolytic solution.

The end lid 222 supports the electrode assembly 23 in a gravity direction. In this case, the end lid 222 is a bottom wall of the can 22.

The end lid 222 supports the electrode assembly 23 in the gravity direction, which corresponds to a scenario in which the cell 20 is used upside down. When the cell 20 is used upside down, a risk of liquid leakage in the connecting portion 223 increases, and the guard 21 can achieve a better guarding effect.

In some embodiments, the guard 21 is an insulation sheet, and the insulation sheet is adhered to the outer surface of the end lid 222 through an adhesive layer and covers at least a part of the connecting portion 223.

The insulation sheet is made of a material having an insulation property. The insulation sheet may be plastic, rubber, or the like. In some embodiments, the insulation sheet is made of polyethylene terephthalate.

The guard 21 has an insulation function, and can isolate the end lid 222 from other components, to prevent the other components from coming into contact with the end lid 222 and causing a short circuit.

In some other embodiments, the guard 21 is an insulation film, the case 221 has an outer peripheral surface arranged around the opening, and the insulation film coats the outer peripheral surface and covers at least a part of the connecting portion 223.

The insulation film may be a blue film or a Mylar film.

In some embodiments, the connecting portion 223 is located at an end of the can 22. The insulation film coats the outer peripheral surface of the case 221 and is folded over toward the end lid 222 to cover the connecting portion 223.

In some other embodiments, the connecting portion 223 is arranged around the outer peripheral surface of the case 221. In this case, the connecting portion 223 covers the outer peripheral surface of the case 221 while covering the connecting portion 223 (without being folded over toward the end lid 222).

The insulation film coats the outer peripheral surface of the case 221 and covers at least a part of the connecting portion 223, so that not only an effect of slowing down liquid leakage from the connecting portion 223 can be achieved, but also the case 221 can be isolated from other components, thereby reducing a risk that the other components come into contact with the case 221 and cause a short circuit.

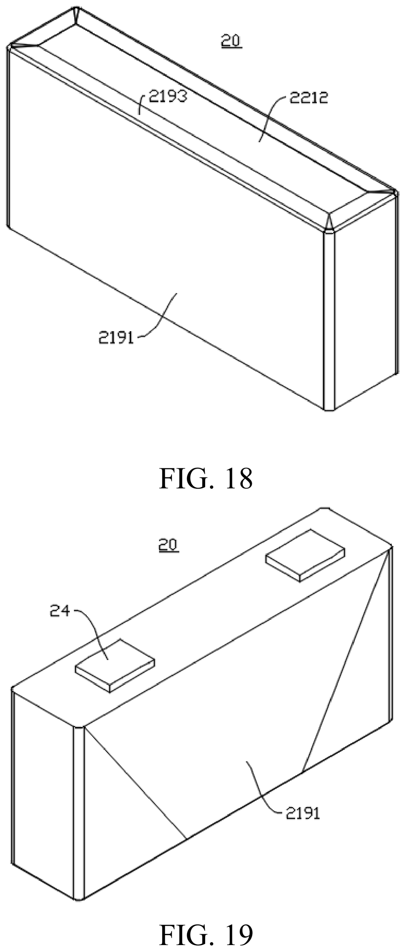

Reference is made to FIG. 17 and FIG. 18. FIG. 17 is a schematic front structural view of a cell 20 according to some yet other embodiments of this application. FIG. 18 is a schematic back structural view of a cell 20 according to some yet other embodiments of this application. In some embodiments, the insulation film includes a main body portion 2191 and a first flange portion 2192. The main body portion 2191 coats the outer peripheral surface, and the first flange portion 2192 is connected to an edge of the main body portion 2191. The first flange portion 2192 is located at the end lid 222 and covers at least a part of the connecting portion 223.

The main body portion 2191 is a part of the insulation film coating the outer peripheral surface of the case 221. Optionally, the main body portion 2191 completely coats the outer peripheral surface of the case 221.

The first flange portion 2192 is a flange portion that is on the insulation film and that is folded over toward the end lid 222. The first flange portion 2192 is connected to an end of the main body portion 2191 close to the end lid 222. After the first flange portion 2192 is folded over relative to the main body portion 2191 toward the end lid 222, the first flange portion 2192 covers at least a part of the connecting portion 223.

The main body portion 2191 coats the outer peripheral surface of the case 221, to isolate the case 221 from other components. The first flange portion 2192 covers at least a part of the connecting portion 223, which can lower a liquid leakage speed. In addition, the first flange portion 2192 is located at the end lid 222 and can isolate the end lid 222 from other components, thereby reducing a risk that the end lid 222 comes into contact with the other components and causes a short circuit, which is conducive to improving the safety of the cell 20.

Referring to FIG. 17 and FIG. 18, in some embodiments, the case 221 includes a side wall and a bottom wall 2212. The side wall and the bottom wall 2212 are integrally formed. One end of the side wall is connected to the bottom wall 2212, and an other end of the side wall encloses an opening. The main body portion 2191 coats an outer surface of the side wall. The guard 21 includes a second flange portion 2193. The second flange portion 2193 is connected to an end of the main body portion 2191 facing away from the first flange portion 2192. The second flange portion 2193 covers at least a part of the bottom wall 2212.

When the case 221 is provided, the side wall and the bottom wall 2212 are of an integrated structure. The side wall and the bottom wall 2212 may be integrally formed by stamping, or may be integrally formed by casting. One end of the side wall is connected to the bottom wall 2212, and an other end of the side wall is connected to the end lid 222 to form the connecting portion 223. The bottom wall 2212 and the end lid 222 are oppositely arranged along the thickness direction of the end lid 222.

In some of the foregoing embodiments, the outer peripheral surface of the case 221 is the outer surface of the side wall. The main body portion 2191 coats the outer surface of the side wall, to isolate the side wall from other components.

The second flange portion 2193 is a flange portion that is on the insulation film and that is folded over toward the bottom wall 2212. The second flange portion 2193 is connected to an end of the main body portion 2191 close to the bottom wall 2212. The first flange portion 2192 and the second flange portion 2193 are connected to two ends of the main body portion 2191 along the thickness direction of the end lid 222.

The second flange portion 2193 is formed to cover the bottom wall 2212, so that the main body portion 2191 can completely cover the outer surface of the side wall, thereby reducing a risk that the side wall comes into contact with the other components and causes a short circuit, which is conducive to improving the safety of the cell 20. In addition, the second flange portion 2193 covers at least a part of the bottom wall 2212 and can also isolate the bottom wall 2212 from other components, thereby reducing a risk that the bottom wall 2212 comes into contact with the other components and causes a short circuit, which is conducive to improving the safety of the cell 20. When the second flange portion 2193 covers a part of the bottom wall 2212, the second flange portion 2193 defines an accommodating cavity, and the accommodating cavity may be filled with an adhesive, to facilitate adhesion to the bottom wall 2212, thereby fastening the cell 20.

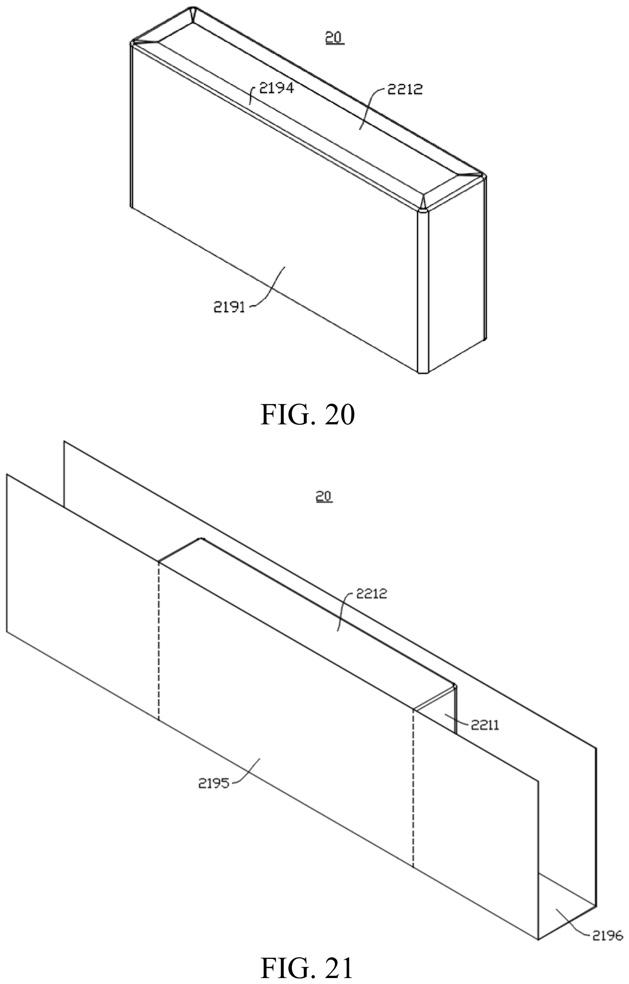

Reference is made to FIG. 19 and FIG. 20. FIG. 19 is a schematic front structural view of a cell 20 according to some yet still other embodiments of this application. FIG. 20 is a schematic back structural view of a cell 20 according to some yet still other embodiments of this application. In some other embodiments, the case 221 includes a side wall and a bottom wall 2212 that are integrally formed, and the side wall is arranged around the bottom wall 2212. Along a thickness direction of the bottom wall 2212, one end of the side wall is connected to the bottom wall 2212, and an other end of the side wall encloses an opening. An insulation film includes a main body portion 2191 and a third flange portion 2194. The main body portion 2191 coats an outer surface of an end lid 222 and an outer surface of the side wall. The third flange portion 2194 is connected to an edge of the main body portion 2191, and the third flange portion 2194 covers at least a part of the bottom wall 2212.

The main body portion 2191 is a part of the insulation film coating the outer surface of the end lid 222 and the outer surface of the side wall. Because the side wall and the end lid 222 are connected to form a connecting portion 223, when the main body portion 2191 coats the outer surfaces of the end lid 222 and the side wall, the connecting portion 223 can also be coated. Optionally, the main body portion 2191 completely coats the outer surface of the end lid 222 and the outer surface of the side wall.

The third flange portion 2194 is a flange portion of the insulation film folded over toward the bottom wall 2212. The third flange portion 2194 is connected to one end of the main body portion 2191 close to the bottom wall 2212, and the third flange portion 2194 is folded over relative to the main body portion 2191 toward the bottom wall 2212.

The main body portion 2191 coats the outer surface of the end lid 222 and the outer surface of the side wall, to isolate the end lid 222 from other components and isolate the side wall from other components, thereby reducing a risk that the end lid 222 comes into contact with the other components and causes a short circuit and a risk that the side wall comes into contact with the other components and causes a short circuit, which is conducive to improving the safety of the cell 20. While coating the outer surfaces of the end lid 222 and the side wall, the main body portion 2191 also covers the connecting portion 223 formed by connecting the end lid 222 and the side wall, so that the speed of leakage of liquid from the connecting portion 223 can be lowered, thereby improving the safety of the cell 20. The third flange portion 2194 is formed to cover the bottom wall 2212, so that the main body portion 2191 can completely cover the outer surface of the side wall, thereby reducing a risk that the side wall comes into contact with the other components and causes a short circuit, which is conducive to improving the safety of the cell 20. In addition, the third flange portion 2194 covers at least a part of the bottom wall 2212 and can also isolate the bottom wall 2212 from other components, thereby reducing a risk that the bottom wall 2212 comes into contact with the other components and causes a short circuit, which is conducive to improving the safety of the cell 20. When the third flange portion 2194 covers a part of the bottom wall 2212, the third flange portion 2194 defines the accommodating cavity, and the accommodating cavity may be filled with an adhesive, to facilitate adhesion to the bottom wall 2212, thereby fastening the cell 20.

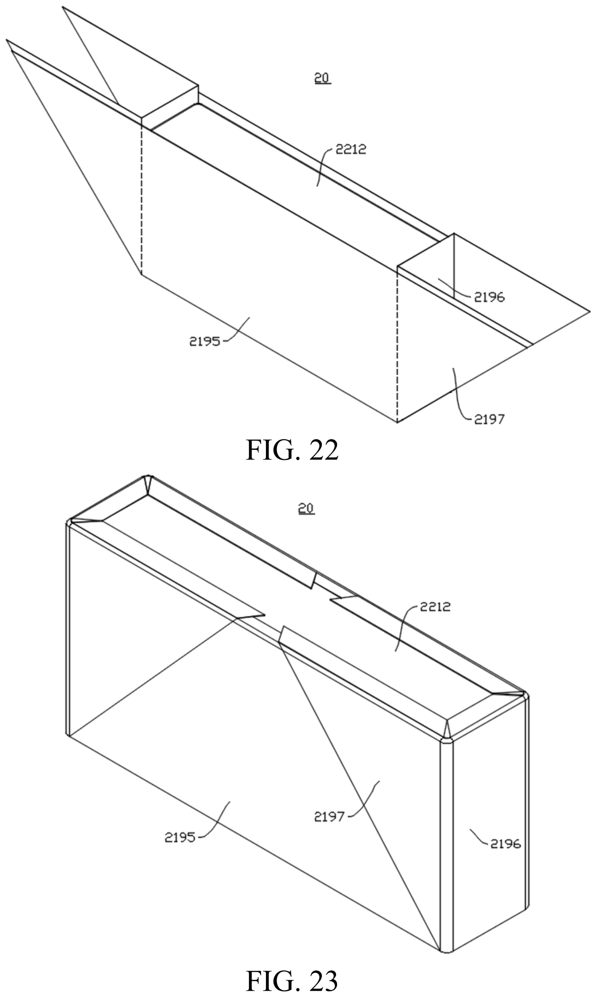

Reference is made to FIG. 21, FIG. 22, and FIG. 23. Reference is made to FIG. 21, FIG. 22, and FIG. 23. FIG. 21 is a schematic structural diagram of a film coating structure of a cell 20 according to some other embodiments of this application (in which a first covering region 2195 covers a first wall portion, and a second covering region 2196 has not been folded). FIG. 22 is a schematic structural diagram of a film coating structure of a cell 20 according to some embodiments of this application (in which a first covering region 2195 covers a first wall portion, and a second covering region 2196 covers a second wall portion 2211). FIG. 23 is a schematic structural diagram of a film coating structure of a cell 20 according to some embodiments of this application (in which an overlapping region 2197 is folded over on a first covering region 2195). In some embodiments, the side wall includes first wall portions and second wall portions 2211, where the first wall portions are connected to the second wall portions 2211, and the first wall portion is a wall portion having a largest surface area in the case 221. The main body portion 2191 includes a first covering region 2195, a second covering region 2196, and an overlapping region 2197. The overlapping region 2197 connects the first covering region 2195 and the second covering region 2196. The first covering region 2195 completely covers the first wall portion, and the second covering region 2196 completely covers the second wall portion 2211. The overlapping region 2197 is folded over on the first covering region 2195 or the second covering region 2196.

The first wall portion is the wall portion having the largest surface area in the case 221, and is usually referred to as a "large surface". The second wall portion 2211 is adjacent to the first wall portion, and has a smaller surface area than the first wall portion.

The first covering region 2195 is a part of the main body portion 2191 directly fitting the first wall portion. The first covering region 2195 completely covers an outer surface of the first wall portion.

The second covering region 2196 is a part of the main body portion 2191 directly fitting the second wall portion 2211. The second covering region 2196 completely covers an outer surface of the second wall portion 2211.

The overlapping region 2197 is a part of the insulation film that does not directly fit the side wall and that is formed when the insulation film coats the end lid 222 and the side wall. The overlapping region 2197 may be folded over on the first covering region 2195, to directly fit a surface of the first covering region 2195 facing away from the first wall portion. Alternatively, the overlapping region 2197 may be folded over on the second covering region 2196, to directly fit a surface of the second covering region 2196 facing away from the second wall portion 2211.

The first covering region 2195 completely covers the first wall portion, and the second covering region 2196 completely covers the second wall portion 2211. When liquid leakage occurs at the connecting portion 223, liquid needs to climb from a position of the end lid 222 along the first wall portion and/or the second wall portion 2211 toward the bottom wall 2212, and finally flows out of the guard 21 from a position of the third flange portion 2194, leading to a longer path and longer time required for the liquid to leak from the guard 21, which can effectively lower the liquid leakage speed, thereby improving the safety of the cell 20.

Referring to FIG. 21, FIG. 22, and FIG. 23, in some embodiments, the main body portion 2191 includes two first covering regions 2195, two second covering regions 2196, and a third covering region. The first covering regions 2195 and the first wall portions are in a one-to-one correspondence, and the second covering regions 2196 and the second wall portions 2211 are in a one-to-one correspondence. The third covering region coats the end lid 222. The first covering regions 2195 and the second covering regions 2196 are connected to the third covering region, and creases are formed at connection positions between the first covering regions 2195 and the third covering region and at connection positions between the first covering regions 2195 and the third covering region.

The side wall includes two first wall portions and two second wall portions 2211, the two first wall portions are arranged opposite to each other, and the two second wall portions 2211 are arranged opposite to each other. Correspondingly, the main body portion 2191 includes two first covering regions 2195 and two second covering regions 2196, where one first covering region 2195 covers one first wall portion, and one second covering region 2196 covers one second wall portion 2211.

The third covering region coats the end lid 222. After the insulation film coats the cell 20, the two first covering regions 2195 and the two second covering regions 2196 are respectively connected to edges of the third covering region. The connection positions between the first covering regions 2195 and the third covering region are located at lateral edges of the can 22, and creases are formed at the connection positions. The connection positions between the second covering regions 2196 and the third covering region are located at lateral edges of the can 22, and creases are formed at the connection positions.

An insulation film coats the end lid 222 and the case 221 in a folding manner, leading to good integrity and uneasy vulnerability.

Referring to FIG. 21, FIG. 22, and FIG. 23, the insulation film may coat the cell 20 as follows:
First, the insulation film is laid flat, and the end lid 222 of the cell 20 is turned upside down on the insulation film, so that the insulation film fits the end lid 222. A part of the insulation film fitting the end lid 222 forms the third covering region. Referring to FIG. 21, the insulation film is folded over toward the first wall portions, so that the insulation film completely coats the first wall portions, and parts coating the first wall portions are the first covering regions 2195. For convenience of displaying ranges of the first covering regions 2195, boundaries of the first covering region 2195 are drawn by using dashed lines in FIG. 21 (where the dashed lines in FIG. 22 are also for convenience of displaying the ranges of the first covering regions 2195). Referring to FIG. 22, the insulation film is folded over toward the second wall portions 2211, so that the insulation film completely coats the second wall portions 2211, and parts coating the second wall portions 2211 are the second covering regions 2196. In this process, connecting portions between the first covering regions 2195 and the second covering regions 2196 overlap to form overlapping regions 2197. Referring to FIG. 23, the overlapping regions 2197 are folded over toward the first wall portions, so that the overlapping regions 2197 overlap the first wall portions. Finally, the insulation film is folded over toward the bottom wall 2212, to form the third flange portion 2194.

In some embodiments, the case 221 includes a side wall and a bottom wall 2212 that are integrally formed, and the side wall is arranged around the bottom wall 2212. Along a thickness direction of the bottom wall 2212, one end of the side wall is connected to the bottom wall 2212, and an other end of the side wall encloses an opening. The side wall and the bottom wall 2212 jointly define an accommodating cavity. The cell 20 further includes an electrode assembly 23 and an electrode terminal 24. The electrode assembly 23 is accommodated in the accommodating cavity. The electrode assembly 23 is electrically connected to the electrode terminal 24. The end lid 222 closes an opening, and the end lid 222 is configured to support the electrode assembly 23 in a gravity direction, and the electrode terminal 24 is arranged on the bottom wall 2212.

When the case 221 is provided, the side wall and the bottom wall 2212 are of an integrated structure. The side wall and the bottom wall 2212 may be integrally formed by stamping, or may be integrally formed by casting. One end of the side wall is connected to the bottom wall 2212, and an other end of the side wall is connected to the end lid 222 to form the connecting portion 223. The bottom wall 2212 and the end lid 222 are oppositely arranged along the thickness direction of the bottom wall 2212.

The end lid 222 supports the electrode assembly 23 in the gravity direction, which corresponds to a scenario in which the cell 20 is used upside down. When the cell 20 is used upside down, a risk of liquid leakage in the connecting portion 223 increases, and the guard 21 can achieve a better guarding effect. In addition, the electrode terminal 24 is arranged on the bottom wall 2212. Compared with the technical solution in which the electrode terminal 24 is arranged on the end lid 222, liquid at the electrode terminal 24 is less likely to leak (the electrode terminal 24 is located at the top of the can 22, and pressure of the liquid on the electrode terminal 24 is small). In addition, the guard 21 may not be provided with an avoidance hole 215 for avoiding the electrode terminal 24, so that an electrolytic solution stored in the guard 21 is less likely to leak out of the avoidance hole 215, which is conducive to improving a liquid storage capability of the guard 21.

An embodiment of this application further provides a battery 100. The battery 100 includes the foregoing cell 20.

In some embodiments, the battery 100 further includes a wire harness separator. The wire harness separator is provided with a drain channel. The guard 21 is configured to guide liquid leaking from the connecting portion 223 to the drain channel.

The wire harness separator is a component that is in the battery 100 and that is used for arranging and organizing a wire harness. The wire harness separator is provided with the drain channel. The drain channel can guide liquid to a specific position of a box body 10, so that the liquid does not affect safety of the battery 100.

When liquid leakage occurs at the connecting portion 223, the guard 21 can guide liquid leaking from the connecting portion 223 to the drain channel on the wire harness separator. The liquid passing through the drain channel no longer poses a safety risk, which helps to improve the safety of the cell 20.

In some embodiments, the preset position and the drain channel are arranged at least partially opposite to each other along a gravity direction.

That "the preset position and the drain channel are arranged at least partially opposite to each other along a gravity direction" means that an outlet end at the preset position and an inlet end of the drain channel are arranged at least partially opposite to each other along the gravity direction.

When liquid leakage occurs at the connecting portion 223, the guard 21 can guide liquid leaking from the connecting portion 223 to flow out from the preset position of the guard 21, and the liquid flowing out from the preset position can directly flow into the drain channel under the action of gravity, which is simple, convenient, and highly safe.

In some embodiments, the guard 21 is provided with a liquid outlet hole 211. The liquid outlet hole 211 is configured for guiding liquid to the drain channel.

When liquid leakage occurs at the connecting portion 223, the guard 21 can guide liquid leaking from the connecting portion 223 to the drain channel on the wire harness separator through the liquid outlet hole 211. The liquid passing through the drain channel no longer poses a safety risk, which helps to improve the safety of the cell.

In some embodiments, the liquid outlet hole 211 and the drain channel are arranged at least partially opposite to each other along a gravity direction.

That "the liquid outlet hole 211 and the drain channel are arranged at least partially opposite to each other along a gravity direction" means that an end of the liquid outlet hole 211 facing away from the interior of the cell 20 and an inlet end of the drain channel are arranged at least partially opposite to each other.

When liquid leakage occurs at the connecting portion 223, the guard 21 can guide liquid leaking from the connecting portion 223 to flow out from the liquid outlet hole 211 of the guard 21, and the liquid flowing out from the liquid outlet hole 211 can directly flow into the drain channel under the action of gravity, which is simple, convenient, and highly safe.

In some embodiments, the drain channel is a drain hole provided on the wire harness separator. The liquid outlet hole 211 of the guard 21 and the drain hole are coaxially arranged.

In some embodiments, the battery 100 further includes a box body 10. The cell 20 is arranged in the box body 10, and the end lid 222 is arranged on a side of the cell 20 close to a bottom wall of the box body 10.

The bottom wall of the box body 10 is a wall surface of the box body 10 opposite to an open end of the box body 10.

The end lid 222 is arranged on the side of the cell 20 close to the bottom wall of the box body 10, that is, the cell 20 is placed upside down in the box body 10.

An embodiment of this application further provides an electric device. The electric device includes the foregoing battery 100. The battery 100 is configured to provide electric energy to the electric device.

According to some embodiments of this application, reference is made to FIG. 3 to FIG. 8.

An embodiment of this application provides a cell 20. The cell 20 includes a can 22 and a guard 21. The can 22 includes a case 221 and an end lid 222. The case 221 has an opening. The end lid 222 is connected to the case 221 and closes the opening. The end lid 222 is connected to the case 221 to form a connecting portion 223. The guard 21 is arranged on an outer surface of the can 22 and covers at least a part of the connecting portion 223. The guard 21 is arranged on the cell 20, and the guard 21 covers at least a part of the connecting portion 223. The guard 21 can prevent liquid from leaking from the connecting portion 223 to some extent, and lower a liquid leakage speed, thereby improving safety of the cell 20 to some extent.

The guard 21 is configured to guide the liquid leaking from the connecting portion 223 to flow out from a preset position of the guard 21. The guard 21 is arranged on the cell 20, and the guard 21 covers at least a part of the connecting portion 223. When liquid leakage occurs at the connecting portion 223, the guard 21 can guide liquid leaking from the connecting portion 223 to flow out from the preset position of the guard 21, to prevent the liquid from flowing around and causing a short-circuit fire or ignition by a high voltage, which is conducive to improving the safety of the cell 20.

The guard 21 is provided with a liquid outlet hole 211, and the liquid outlet hole 211 is for liquid to flow out of the guard 21. The liquid outlet hole 211 is a preset position of the guard 21. When liquid leakage occurs at the connecting portion 223, the guard 21 can guide liquid leaking from the connecting portion 223 to flow out from the liquid outlet hole 211. The liquid flowing out from the liquid outlet hole 211 can be collected or treated by another structure in the battery 100, to prevent the liquid from flowing around and causing a short-circuit fire or ignition by a high voltage, which is conducive to improving the safety of the cell 20.

The guard 21 includes a top wall 212 and a peripheral wall 213. The top wall 212 covers an outer surface of the end lid 222, and the peripheral wall 213 is arranged around an outer edge of the top wall 212. The peripheral wall 213 covers at least a part of an outer peripheral surface of the case 221. The liquid outlet hole 211 is provided on the top wall 212. The top wall 212 and the peripheral wall 213 enclose an accommodating space. When liquid leakage occurs at the connecting portion 223, liquid first gathers in the accommodating space and then is drained from the liquid outlet hole 211, so that the liquid leaking from the connecting portion 223 is guided to flow out from the preset position of the guard 21, to prevent the liquid from flowing around and causing a short-circuit fire or ignition by a high voltage, which is conducive to improving the safety of the cell 20.

The cell 20 further includes a vent mechanism 25, and the vent mechanism 25 is arranged on the end lid 222 or the case 221. The guard 21 covers the vent mechanism 25, and the guard 21 is configured to guide liquid leaking from the vent mechanism 25 to flow out from a preset position of the guard 21. The vent mechanism 25 is also a weak position, and liquid is prone to leaking from the vent mechanism 25. By covering the vent mechanism 25 with the guard 21, when liquid leakage occurs at the vent mechanism 25, the guard 21 can guide liquid leaking from the vent mechanism 25 to flow out from the preset position of the guard 21, to prevent the liquid from flowing around and causing a short-circuit fire or ignition by a high voltage, which is conducive to improving the safety of the cell 20.

The cell 20 further includes a liquid injection hole 26 and a sealing member. The liquid injection hole 26 is provided on the end lid 222, and the sealing member is configured to seal the liquid injection hole 26. The guard 21 covers the liquid injection hole 26 and the sealing member, and the guard 21 is configured to guide liquid leaking from the liquid injection hole 26 to flow out from a preset position of the guard 21. Although the liquid injection hole 26 is sealed by a sealing member, the liquid injection hole is also a weak position in a scenario in which the cell 20 is placed upside down, and liquid is prone to leaking from the liquid injection hole 26. By covering the liquid injection hole 26 and the sealing member with the guard 21, when liquid leakage occurs at the liquid injection hole 26, the guard 21 can guide liquid leaking from the liquid injection hole 26 to flow out from the preset position of the guard 21, to prevent the liquid from flowing around and causing a short-circuit fire or ignition by a high voltage, which is conducive to improving the safety of the cell 20.

The cell 20 includes an electrode terminal 24. The electrode terminal 24 is arranged on the end lid 222, and the guard 21 covers the end lid 222. The guard 21 is provided with a liquid outlet hole 211. The liquid outlet hole 211 is for liquid to flow out of the guard 21, and the electrode terminal 24 extends out of the guard 21 from the liquid outlet hole 211. Because the electrode terminal 24 needs to output electric energy of the cell 20 or input electric energy to the cell 20, when the guard 21 is arranged on the end lid 222, the guard 21 needs to avoid the electrode terminal 24, to prevent the guard 21 from interfering with input or output of electric energy of the cell 20. The liquid outlet hole 211 serves as both a preset position of the guard 21 and an extending position of the electrode terminal 24. One liquid outlet hole 211 implements two functions, which is conducive to simplifying the structure of the guard 21.

The guard 21 is configured to absorb liquid leaking from the connecting portion 223. When liquid leakage occurs at the connecting portion 223, the guard 21 can absorb liquid leaking from the connecting portion 223, to prevent the liquid from flowing around and causing a short-circuit fire or ignition by a high voltage, which is conducive to improving the safety of the cell 20.

The guard 21 is made of a liquid-absorbing material, where a volume of liquid absorbable by the liquid-absorbing material is at least three times of a volume of the liquid-absorbing material. The guard 21 is made of the liquid-absorbing material, to help the guard 21 to absorb liquid leaking from the connecting portion 223. Because a volume of free liquid in the cell 20 is limited, when the liquid-absorbing material can absorb liquid whose volume is at least three times a volume of the liquid-absorbing material, effective absorption of leaked liquid can be ensured.

An accommodating space for collecting liquid is formed in the guard 21, and the connecting portion 223 is at least partially located in the accommodating space. The accommodating space is formed in the guard 21, so that liquid leaking from the connecting portion 223 can be stored in the accommodating space, to prevent the liquid from flowing around and causing a short-circuit fire or ignition by a high voltage, which is conducive to improving the safety of the cell 20. The guard 21 includes a top wall 212 and a peripheral wall 213. The top wall 212 covers an outer surface of the end lid 222, and the peripheral wall 213 is arranged around an outer edge of the top wall 212. The peripheral wall 213 covers at least a part of an outer peripheral surface of the case 221. The top wall 212 and the peripheral wall 213 enclose an accommodating space. The top wall 212 and the peripheral wall 213 enclose the accommodating space. When liquid leakage occurs at the connecting portion 223, the guard 21 can store liquid leaking from the connecting portion 223 in the accommodating space, to prevent the liquid from flowing around and causing a short-circuit fire or ignition by a high voltage, which is conducive to improving the safety of the cell 20.

The guard 21 is an insulation sheet, and the insulation sheet is adhered to an outer surface of the end lid 222 by using an adhesive layer 2125. The guard 21 has an insulation function, and can isolate the end lid 222 from other components, to prevent the other components from coming into contact with the end lid 222 and causing a short circuit.

The guard 21 is an insulation film, the case 221 has an outer peripheral surface arranged around the opening, and the insulation film coats the outer peripheral surface and covers at least a part of the connecting portion 223. The insulation film may be a blue film or a Mylar film. The insulation film coats the outer peripheral surface of the case 221 and covers at least a part of the connecting portion 223, so that not only an effect of slowing down liquid leakage from the connecting portion 223 can be achieved, but also the case 221 can be isolated from other components, thereby reducing a risk that the other components come into contact with the case 221 and cause a short circuit.

It should be noted that the embodiments of this application and features in the embodiments may be mutually combined in a case that no conflict occurs.

The above descriptions are merely preferred embodiments of this application and are not intended to limit this application. For a person skilled in the art, this application may have various modifications and changes. Any modification, equivalent replacement, or improvement made without departing from the spirit and principle of this application shall fall within the protection scope of this application.

## Claims

1. A cell, comprising:
a can, comprising a case and an end lid, wherein the case has an opening, the end lid is connected to the case and closes the opening, and the end lid is connected to the case to form a connecting portion; and
a guard, arranged on an outer surface of the can and covering at least a part of the connecting portion.

2. The cell according to claim 1, wherein the guard comprises a top wall, wherein the top wall covers an outer surface of the end lid and at least a part of the connecting portion, and the top wall is provided with a liquid outlet hole.

3. The cell according to claim 2, wherein the guard comprises a peripheral wall, wherein the peripheral wall is arranged around an outer edge of the top wall, and the peripheral wall covers at least a part of an outer peripheral surface of the case.

4. The cell according to claim 2 or 3, wherein a convex portion is convexly arranged on a side of the guard facing the can, and the convex portion is arranged around the liquid outlet hole.

5. The cell according to claim 4, wherein a height by which the convex portion protrudes from the guard is D, satisfying: 0.1 mm≤D≤0.5 mm.

6. The cell according to claim 1, wherein an accommodating space is formed in the guard, and the connecting portion is at least partially located in the accommodating space.

7. The cell according to claim 6, wherein the guard comprises a top wall and a peripheral wall, wherein the top wall covers an outer surface of the end lid, and the peripheral wall is arranged around an outer edge of the top wall, the peripheral wall covers at least a part of an outer peripheral surface of the case, and the top wall and the peripheral wall enclose the accommodating space.

8. The cell according to claim 7, wherein the guard is provided with a liquid outlet hole, wherein the liquid outlet hole is in communication with the accommodating space.

9. The cell according to any one of claims 6 to 8, wherein the guard comprises a first wall, a second wall, and a third wall that are sequentially connected, wherein the second wall is annular, the second wall is arranged opposite to the connecting portion, the first wall and the third wall are oppositely arranged on two sides of the second wall in a width direction, one of the first wall and the third wall is connected to the case, the other of the first wall and the third wall is connected to the end lid, and the first wall, the second wall, and the third wall jointly define the accommodating space.

10. The cell according to any one of claims 1 to 9, further comprising a vent mechanism, wherein the vent mechanism is arranged on the end lid or the case, and the guard covers the vent mechanism.

11. The cell according to claim 10, wherein the vent mechanism is arranged on the end lid, and a gap is provided between the vent mechanism and the guard along a thickness direction of the end lid.

12. The cell according to claim 11, wherein a dimension of the gap along the thickness direction is H, satisfying: H≥1.5 mm.

13. The cell according to any one of claims 1 to 12, further comprising a liquid injection hole and a sealing member, wherein the liquid injection hole is provided on in the end lid, the sealing member is configured to seal the liquid injection hole, and the guard covers the liquid injection hole and the sealing member.

14. The cell according to any one of claims 1 to 13, wherein the guard comprises a liquid-absorbing material, wherein a volume of liquid absorbable by the liquid-absorbing material is at least three times of a volume of the liquid-absorbing material.

15. The cell according to any one of claims 1 to 14, wherein the guard completely covers the connecting portion.

16. The cell according to claim 15, wherein the guard covers at least a part of the end lid and at least a part of the case.

17. The cell according to any one of claims 1 to 16, wherein the connecting portion comprises a first connecting region and a second connecting region, wherein the first connecting region is connected to the second connecting region, a fusion depth of the first connecting region is smaller than a fusion depth of the second connecting region, and the guard covers at least a part of the first connecting region.

18. The cell according to any one of claims 1 to 17, comprising an electrode terminal, wherein the electrode terminal is arranged on the end lid, and the guard covers the end lid and avoids the electrode terminal.

19. The cell according to claim 18, wherein the guard is provided with the liquid outlet hole, wherein the electrode terminal extends out of the guard from the liquid outlet hole.

20. The cell according to claim 18, wherein the guard is provided with the liquid outlet hole, and the guard is further provided with an avoidance hole, wherein the liquid outlet hole is spaced apart from the avoidance hole, and the electrode terminal extends out of the guard from the avoidance hole.

21. The cell according to any one of claims 1 to 20, further comprising an electrode assembly, wherein the electrode assembly is accommodated in the can, and the end lid is configured to support the electrode assembly in a gravity direction.

22. The cell according to any one of claims 1 to 21, wherein the guard is an insulation patch, and the insulation patch is adhered to the outer surface of the end lid through an adhesive layer and covers at least a part of the connecting portion.

23. The cell according to any one of claims 1 to 21, wherein the guard is an insulation film, the case has an outer peripheral surface arranged around the opening, and the insulation film coats the outer peripheral surface and covers at least a part of the connecting portion.

24. The cell according to claim 23, wherein the insulation film comprises a main body portion and a first flange portion, the main body portion coats the outer peripheral surface, the first flange portion is connected to an edge of the main body portion, and the first flange portion is located at the end lid and covers at least a part of the connecting portion.

25. The cell according to claim 24, wherein the case comprises a side wall and a bottom wall, the side wall and the bottom wall are integrally formed, one end of the side wall is connected to the bottom wall, and an other end of the side wall encloses the opening; and
the main body portion coats an outer surface of the side wall, the guard comprises a second flange portion, the second flange portion is connected to an end of the main body portion facing away from the first flange portion, and the second flange portion covers at least a part of the bottom wall.

26. The cell according to claim 23, wherein the case comprises a side wall and a bottom wall that are integrally formed, the side wall is arranged around the bottom wall, and along a thickness direction of the bottom wall, one end of the side wall is connected to the bottom wall, and an other end thereof encloses the opening; and
the insulation film comprises a main body portion and a third flange portion, the main body portion coats the outer surface of the end lid and the outer surface of the side wall, the third flange portion is connected to an edge of the main body portion, and the third flange portion covers at least a part of the bottom wall.

27. The cell according to claim 26, wherein the side wall comprises first wall portions and second wall portions, wherein the first wall portions are connected to the second wall portions, and the first wall portion is a wall portion having a largest surface area in the case; and
the main body portion comprises a first covering region, a second covering region, and an overlapping region, wherein the overlapping region connects the first covering region and the second covering region, the first covering region completely covers the first wall portion, the second covering region completely covers the second wall portion, and the overlapping region is folded over on the first covering region or the second covering region.

28. The cell according to claim 27, wherein the main body portion comprises two first covering regions, two second covering regions, and a third covering region, the first covering regions and the first wall portions are in a one-to-one correspondence, the second covering regions and the second wall portions are in a one-to-one correspondence, the third covering region coats the end lid, the first covering regions and the second covering regions are connected to the third covering region, and creases are formed at connection positions between the first covering regions and the third covering region and connection positions between the second covering regions and the third covering region.

29. A battery, comprising the cell according to any one of claims 1 to 28.

30. The battery according to claim 29, further comprising a wire harness separator, wherein the wire harness separator is provided with a drain channel, the guard is provided with a liquid outlet hole, and the liquid outlet hole is configured for guiding liquid to the drain channel.

31. The battery according to claim 30, wherein the liquid outlet hole and the drain channel are arranged at least partially opposite to each other along a gravity direction.

32. The battery according to any one of claims 29 to 31, further comprising a box body, wherein the cell is arranged in the box body, and the end lid is arranged on a side of the cell close to a bottom wall of the box body.

33. An electric device, comprising the battery according to any one of claims 29 to 32, wherein the battery is configured to supply electric energy to the electric device.
